(19) Europäisches Patentamt
European Patent Office
Office européen des brevets

(11) EP 1 126 256 A2

(12) EUROPEAN PATENT APPLICATION

(43) Date of publication:
**22.08.2001 Bulletin 2001/34**

(51) Int Cl.[7]: **G01J 3/26**

(21) Application number: **01103340.4**

(22) Date of filing: **13.02.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **18.02.2000 JP 2000041287**
**18.02.2000 JP 2000041288**
**06.12.2000 JP 2000371261**

(71) Applicant: **Yokogawa Electric Corporation**
**Tokyo 180-8750 (JP)**

(72) Inventors:
- **Hara, Hitoshi**
**Musashino-shi, Tokyo 180-8750 (JP)**
- **Kishi, Naoki**
**Musashino-shi, Tokyo 180-8750 (JP)**
- **Noro, Makoto**
**Musashino-shi, Tokyo 180-8750 (JP)**
- **Iwaoka, Hideto**
**Musashino-shi, Tokyo 180-8750 (JP)**
- **Suzuki, Kentaro**
**Musashino-shi, Tokyo 180-8750 (JP)**

(74) Representative: **Henkel, Feiler, Hänzel**
**Möhlstrasse 37**
**81675 München (DE)**

# (54) Fabry-Perot filter, wavelength-selective infrared detector and infrared gas analyzer using the filter and detector

(57) The present invention is directed to providing a Fabry-Perot filter for selectively transmitting three wavelength bands of infrared radiation, including a wavelength band of reference light.

The present invention therefore relates to a Fabry-Perot filter comprising:

a fixed mirror formed on a substrate;
a movable mirror arranged opposite to the fixed mirror with a gap formed therebetween so that the movable mirror can be displaced with respect to the fixed mirror by applying external force;
a fixed electrode formed on the fixed mirror; and
a movable electrode formed on the movable mirror and arranged opposite to the fixed electrode;

wherein the movable mirror is displaced by applying a potential difference across the fixed and movable electrodes so that the width of the gap is varied in at least three steps, whereby at least three wavelength bands of infrared radiation can be selectively transmitted through the Fabry-Perot filter.

EP 1 126 256 A2

## Description

## BACKGROUND OF THE INVENTION

### Field of the Invention

The present invention relates to a Fabry-Perot filter used as a wavelength-selective filter for admitting rays of light (e.g., infrared radiation) in a wavelength-selective way; a wavelength-selective infrared detector configured by integrating the Fabry-Perot filter with an infrared detector; and a non-dispersive infrared gas analyzer for measuring the concentration of a gas or gases in the atmosphere, for example, by detecting infrared radiation that transmits through the Fabry-Perot filter.

### Description of the Prior Art

In gas analysis, a non-dispersive infrared gas analyzer (hereinafter abbreviated as an NDIR gas analyzer) is used, wherein the analyzer detects the amount of infrared absorption to measure the concentration of a gas, taking advantage of the fact that the wavelength bands of infrared radiation to be absorbed varies depending on the type of gas.

FIGS. 1 to 5 are schematic views showing configuration examples of prior art NDIR gas analyzers.

In the following description, the gas being measured is assumed to be carbon dioxide whose peak wavelength of infrared absorption is approximately 4.25 μm.

FIG. 1 schematically shows the configuration of a single-ray, onewavelength NDIR gas analyzer comprising a sample cell 110 whereinto a gas is supplied, a light source 111, a filter 112, and an infrared detector 113. In this example, the filter 112 is tuned to the absorption bands of carbon dioxide shown in FIG. 6 to select and pass a band of infrared radiation having wavelengths in the vicinity of 4.25 μm. The infrared detector 113 determines the concentration of the gas being measured by detecting infrared radiation passing through the filter 112.

FIG. 2 schematically shows the configuration of a single-ray twowavelength comparative NDIR gas analyzer. As shown in FIG. 7, the analyzer selects two wavelength bands using the filter 112 tuned to the absorption band of carbon dioxide and a filter 114 for passing an infrared radiation band of wavelengths in the vicinity of approximately 3.9 μm as reference light. The bands of infrared radiation thus selected are detected respectively with infrared detectors 113 and 115. In this example, it is possible to correct a change in the output signal with time due to, for example, deterioration in the light source 111 or contamination in the sample cell 110, by comparing the carbon dioxide absorption band with the measured absorption band of the reference light.

FIG. 3 schematically shows the configuration of another single-ray twowavelength comparative NDIR gas analyzer. The analyzer selects two wavelength bands using the filter 112 formed on a disc 116 and tuned to the absorption band of carbon dioxide and the filter 114 for reference light. The bands of infrared radiation selected with the filters as the disc 116 is rotated are then detected with the infrared detector 113. In this example, it is also possible to correct a change in the output signal with time due to, for example, deterioration in the light source 111 or contamination in the sample cell 110, by comparing the carbon dioxide absorption band with the measured absorption band of the reference light.

FIG. 4 schematically shows the configuration of a single-ray twowavelength Fabry-Perot NDIR gas analyzer. In this example, a gap between two mutually parallel mirrors comprising a Fabry-Perot filter 117 is made variable so that two bands are selected, one being a band tuned to the absorption band of the gas being measured and the other being the band of reference light. The bands of infrared radiation thus selected are respectively detected with the infrared detector 113. In this example, it is also possible to correct a change in the output signal with time due to, for example, deterioration in the light source 111 or contamination in the sample cell 110, by comparing the carbon dioxide absorption band with the measured absorption band of the reference light.

The Fabry-Perot filter is, as shown in FIG. 8, an optical filter using a device (Fabry-Perot plates) wherein a pair of high-reflectance mirrors 120 and 121 are placed in parallel and opposite to each other and a gap is formed therebetween.

Assuming the width (distance) of the gap in the Fabry-Perot filter is d and the refractive index within the gap is n, then rays, among the rays of incident light, that satisfy the phase relationship represented by equation 1 below will enhance each other by the effect of interference, thus becoming transmitted light. In equation 1, δ is the phase reference, $\phi$ is the angle of light incident on the device, and $\lambda$ is the wavelength of the light. The way the rays are transmitted is shown in FIG. 9.

$$\delta = 4\pi nd\cos\phi/\lambda \quad (1)$$

The Fabry-Perot filter is designed so that the wavelength bands of the transmitted light passing through the device can be varied by making the gap width d variable. As such a variable-wavelength Fabry-Perot filter, there has been a filter having a fixed mirror, a movable mirror arranged opposite to the fixed mirror with a gap formed therebetween, a fixed electrode formed on the fixed mirror, and a movable electrode formed on the movable mirror, wherein the gap is made variable by applying a voltage across the fixed and movable electrodes and thereby displacing the movable mirror with respect to the fixed mirror. For example, there is a variable-wavelength Fabry-Perot filter that is used as a wavelength-selective filter for non-dispersive infrared carbon dioxide ($CO_2$) sensors and selectively passes the wavelength band of carbon dioxide absorption (approximately 4.25 μm) and the wavelength band of reference-purpose light (approximately 3.9 μm).

FIG. 5 schematically shows the configuration of a double-ray, onewavelength NDIR gas analyzer, wherein two light sources 111 and 118 are arranged so that the optical paths thereof differ from each other within the sample cell 110. In this example, a change in the output signal with time due to, for example, contamination in the sample cell 110 is corrected according to the ratio between two output signals of the infrared detector 113 provided by a band of infrared radiation that passes through the filter 112 tuned to the absorption band of the gas being measured. The concentration of the gas being measured is then determined.

In this type of NDIR gas analyzer, however, the number of filters must be increased to be able to measure concentrations if the gas being measured contains a plurality of constituents. Consequently, the prior art gas analyzers have had the problem that both the cost and size thereof would increase.

The present invention is directed to solving the above-noted problem. A primary purpose of the invention is, therefore, to provide an infrared gas analyzer capable of simultaneously determining the concentrations of at least two constituents of a gas being measured, by realizing a Fabry-Perot filter for selectively passing at least three wavelength bands of infrared radiation, including a band of reference light.

## SUMMARY OF THE INVENTION

The Fabry-Perot filter, wavelength-selective infrared detector and infrared gas analyzer according to the present invention, which is directed to solving the above-noted problem, are defined respectively as:

1) A Fabry-Perot filter for passing infrared radiation from a light source in a wavelength-selective way, comprising:

a fixed mirror formed on a substrate;
a movable mirror arranged opposite to the fixed mirror with a gap formed therebetween, so that the movable mirror can be displaced with respect to the fixed mirror by applying external force;
a fixed electrode formed on the fixed mirror; and
a movable electrode formed on the movable mirror and arranged opposite to the fixed electrode;

wherein the movable mirror is displaced by applying a potential difference across the fixed and movable electrodes so that the width of the gap can be varied in at least three steps, whereby at least three wavelength bands of the infrared radiation are selectively transmitted through the Fabry-Perot filter.

2) The Fabry-Perot filter of definition 1, wherein the fixed and movable mirrors are made of silicon.

3) The Fabry-Perot filter of definition 1, wherein the fixed and movable electrodes are made of silicon with a high impurity concentration.

4) An infrared gas analyzer for determining the concentration of a gas being measured according to the output of an infrared detector, comprising:

a light source for emitting infrared radiation to the gas being measured;
a wavelength-selective filter for passing the infrared radiation from the light source in a wavelength-selective way; and
an infrared detector for detecting infrared radiation passing through the wavelength-selective filter;

wherein the wavelength-selective filter is configured using the Fabry-Perot filter of any of definitions 1 to 3.

5) An infrared gas analyzer for determining the concentration of a gas being measured according to the output of an infrared detector, comprising:

a light source for emitting infrared radiation to the gas being measured;
a wavelength-selective filter for passing the infrared radiation from the light source in a wavelength-selective way; and
an infrared detector for detecting infrared radiation passing through the wavelength-selective filter;

wherein the wavelength-selective filter is configured using the Fabry-Perot filter of any of definitions 1 to 3, is located before the infrared detector in the optical path, and comprises a wide bandpass filter for passing only a specific band of wavelengths.

6) A wavelength-selective infrared detector, wherein a wavelength-selective filter for passing infrared radiation from a light source in a wavelength-selective way and an infrared detector having infrared detector elements for detecting infrared radiation passing through the wavelength-selective filter are formed on the same substrate.

7) The wavelength-selective infrared detector of definition 6, wherein the infrared detector elements are located in a sealed cavity formed in the substrate and the wavelength-selective filter is formed on the sealed cavity so that the cavity is vacuum-sealed or sealed with an inert gas inside.

8) A wavelength-selective infrared detector, comprising:

a wavelength-selective filter formed on a first substrate to pass infrared radiation from a light source in a wavelength-selective way;
and
an infrared detector formed on a second substrate and having infrared detector elements for detecting infrared radiation passing through the wavelength-selective filter;

wherein the first and second substrates are joined together.

9) The wavelength-selective infrared detector of definition 8, wherein the infrared detector elements are located within a groove-shaped part formed in the second substrate so as to form a sealed cavity and the first and second substrates are joined together in a vacuum or inert gas atmosphere so that the wavelength-selective filter is positioned on the groove-shaped part to form the sealed cavity, whereby the sealed cavity is vacuum-sealed or sealed with an inert gas inside.
10) The wavelength-selective infrared detector of any of definitions 6 to 9, wherein the wavelength-selective filter is a Fabry-Perot filter comprising a fixed mirror located on a substrate and a movable mirror arranged opposite to the fixed mirror so that a gap is formed therebetween and the movable mirror can be displaced with respect to the fixed mirror by applying external force.
11) The wavelength-selective infrared detector of any of definitions 6 to 9, wherein the wavelength-selective filter is a Fabry-Perot filter comprising a fixed mirror formed on a substrate, a movable mirror arranged opposite to the fixed mirror with a gap formed therebetween so that the movable mirror can be displaced with respect to the fixed mirror by applying external force, a fixed electrode formed on the fixed mirror, and a movable electrode formed on the movable mirror and arranged opposite to the fixed electrode, whereby the movable mirror can be displaced by applying a potential difference across the fixed and movable electrodes and thereby the width of the gap can be varied.
12) The wavelength-selective infrared detector of definition 11, wherein the Fabry-Perot filter is configured so that the gap can be varied in a plurality of steps by applying a plurality of voltage levels across the fixed and movable electrodes, whereby the Fabry-Perot filter can pass a plurality of wavelength bands of infrared radiation.
13) The wavelength-selective infrared detector of any of definitions 6 to 12, wherein the infrared detector is an infrared bolometer.
14) The wavelength-selective infrared detector of any of definitions 6 to 13, wherein a plurality of the wavelength-selective filters and a plurality of the infrared detectors are horizontally arranged in arrays.

15) An infrared gas analyzer for determining the concentration of a gas being measured according to the output of an infrared detector, comprising:

a light source for emitting infrared radiation to the gas being measured;
a wavelength-selective filter for passing the infrared radiation from the light source in a wavelength-selective way; and
an infrared detector for detecting infrared radiation passing through the wavelength-selective filter;

wherein the wavelength-selective filter and infrared detector are configured using the wavelength-selective infrared detector of any of definitions 6 to 14.

16) An infrared gas analyzer for determining the concentration of a gas being measured according to the output of an infrared detector, comprising:

a light source for emitting infrared radiation to the gas being measured;
a wavelength-selective filter for admitting the infrared radiation from the light source in a wavelength-selective way; and
an infrared detector for detecting infrared radiation passing through the wavelength-selective filter;

wherein the wavelength-selective filter and infrared detector are configured using the wavelength-selective infrared detector of any of definitions 6 to 14 and the infrared gas analyzer further comprises a wide bandpass filter located between the wavelength-selective infrared detector and the light source so as to pass only a specific band of wavelengths.

17) The infrared gas analyzer of any of definitions 4, 5, 15 and 16, wherein the gas being measured contains carbon dioxide and water vapor and the concentrations of the two constituents are measured.

18) The infrared gas analyzer of any of definitions 4, 5, 15 and 16, wherein the gas being measured contains carbon dioxide and carbon monoxide and the concentrations of the two constituents are measured.

19) The infrared gas analyzer of any of definitions 4, 5, 15 and 16, wherein the gas being measured contains nitrogen oxide and sulfur oxide and the concentrations of the two constituents are measured.

20) The infrared gas analyzer of any of definitions 4, 5, 15 and 16, wherein the gas being measured contains carbon dioxide and nitrogen oxide and the concentrations of the two constituents are measured.

21) The infrared gas analyzer of any of definitions 4, 5, 15 and 16, wherein the gas being measured contains carbon dioxide and sulfur oxide and the concentrations of the two constituents are measured.

22) A Fabry-Perot filter having a fixed mirror and a movable mirror arranged opposite to the fixed mirror with a gap formed therebetween, the width of the gap being variable by displacing the movable mirror with respect to the fixed mirror, wherein the movable mirror is formed using a multilayer optical thin film produced by laminating at least one layer presenting tensile stress and at least one layer presenting compressive stress.

23) A Fabry-Perot filter having a fixed mirror and a movable mirror arranged opposite to the fixed mirror with a gap formed therebetween, the width of the gap being variable by displacing the movable mirror with respect to the fixed mirror, wherein the movable mirror is formed using a multilayer optical thin film produced by laminating at least two layers presenting mutually different levels of tensile stress.

24) The Fabry-Perot filter of definition 22 or 23, wherein the multilayer optical thin film is a three-layer optical thin film produced by laminating a high refractive index layer, a low refractive index layer and another high refractive index layer, in this order.

25) The Fabry-Perot filter of definition 24, wherein the multilayer optical thin film is a three-layer optical thin film having a structure among structures **a** to **d** defined as:

a) a structure wherein the multilayer optical thin film is produced by laminating a high refractive index layer presenting compressive stress, a low refractive index layer presenting tensile stress and another high refractive index layer presenting compressive stress, in this order;

b) a structure wherein the multilayer optical thin film is produced by laminating a high refractive index layer presenting tensile stress, a low refractive index layer presenting compressive stress and another high refractive index layer presenting tensile stress, in this order;

c) a structure wherein the multilayer optical thin film is produced by laminating a high refractive index layer presenting a low tensile stress level, a low refractive index layer presenting a high tensile stress level and another high refractive index layer presenting a low tensile stress level, in this order; and

d) a structure wherein the multilayer optical thin film is produced by laminating a high refractive index layer presenting a high tensile stress level, a low refractive index layer presenting a low tensile stress level and another high refractive index layer presenting a high tensile stress level, in this order.

26) The Fabry-Perot filter of any of definitions 22 to 25, wherein the thickness of the multilayer optical thin film is $\lambda/4$ ($\lambda$: wavelength).

27) A Fabry-Perot filter having a fixed mirror and a movable mirror arranged opposite to the fixed mirror with a gap formed therebetween, a fixed electrode formed on the fixed mirror, and a movable electrode formed on the movable mirror, the width of the gap being variable by displacing the movable mirror with respect to the fixed mirror, wherein an isolation layer is located between the fixed and movable electrodes.

28) The Fabry-Perot filter of definition 27, wherein an isolation layer is formed on the fixed electrode.

29) The Fabry-Perot filter of definition 27 or 28, wherein the isolation layer is made of silicon nitride or silicon oxide.

30) A Fabry-Perot filter having a fixed mirror formed on a substrate and a movable mirror arranged opposite to the fixed mirror with a gap formed therebetween, the width of the gap being variable by displacing the movable mirror with respect to the fixed mirror, wherein the gap is formed by depositing a sacrificial layer of predetermined shape and size between the fixed and movable mirrors and then removing the sacrificial layer completely or partially by means of etching.

31) The Fabry-Perot filter of definition 30, wherein the vertical cross-section of the sacrificial layer is approximately trapezoid and electrode pads for tapping the movable and fixed electrodes are formed in a region outside the sacrificial layer.

32) The Fabry-Perot filter of definition 30 or 31, further comprising an antireflection layer formed on the backside of the substrate and a metal aperture formed on the antireflection layer through a protection layer and having an optical area in part, wherein the sacrificial layer is first removed by etching and then a portion of the protection layer present in the optical area is likewise removed.

33) The Fabry-Perot filter of definition 30 or 31, further comprising etching holes formed at the center and along the periphery of the movable mirror in order to etch the sacrificial layer.

## BRIEF DESCRIPTION OF THE DRAWINGS

FIG. 1 is a schematic view showing the configuration of a prior art NDIR gas analyzer.
FIG. 2 is a schematic view showing the configuration of another prior art NDIR gas analyzer.
FIG. 3 is a schematic view showing the configuration of yet another prior art NDIR gas analyzer.
FIG. 4 is a schematic view showing the configuration of yet another prior art NDIR gas analyzer.
FIG. 5 is a schematic view showing the configuration of yet another prior art NDIR gas analyzer.
FIG. 6 is a graph showing the infrared transmission and absorption bands of a filter.
FIG. 7 is a graph showing the infrared transmission and absorption bands of another filter.
FIG. 8 is a schematic view explaining Fabry-Perot plates.
FIG. 9 is a graph showing the way light transmits through a Fabry-Perot filter.
FIG. 10 is a cross-sectional view schematically showing the configuration of a first embodiment of the Fabry-Perot filter according to the present invention.
FIG. 11 is a graph showing the infrared absorption band of carbon dioxide.
FIG. 12 is a graph showing the absorption band of water vapor.
FIG. 13 is a schematic view explaining the behavior of the first embodiment of the Fabry-Perot filter according to the present invention.
FIG. 14 is a graph showing the transmission and gas absorption bands of the Fabry-Perot filter.
FIG. 15 is a schematic view showing the configuration of an infrared gas analyzer using the Fabry-Perot filter shown in FIG. 13.
FIG. 16 is a cross-sectional view schematically showing the configuration of a first embodiment of the wavelength-selective infrared detector according to the present invention.
FIG. 17 is a cross-sectional view schematically showing the configuration of a second embodiment of the wavelength-selective infrared detector according to the present invention.
FIG. 18 is a cross-sectional view schematically showing the configuration of a third embodiment of the wavelength-selective infrared detector according to the present invention.
FIG. 19 is a schematic view showing the configuration of an infrared gas analyzer using the second and third embodiments of the wavelengthselective infrared detector according to the present invention.
FIG. 20 is a schematic view explaining the Fabry-Perot filter.
FIG. 21 is a cross-sectional view schematically explaining the way a gap is formed in the Fabry-Perot filter.
FIG. 22 is a cross-sectional view schematically showing the configuration of the Fabry-Perot filter according to the present invention.
FIG. 23 is a graph showing the transmission characteristics of Fabry-Perot filters, one of which using a single layer and the other using three layers for the movable mirrors thereof.
FIG. 24 is a schematic view explaining an example of the Fabry-Perot filter using a three-layer movable mirror.
FIG. 25 is a schematic view explaining an example of the Fabry-Perot filter using a single-layer movable mirror.
FIG. 26 is a schematic view showing an example of a multilayer movable mirror.
FIG. 27 is a cross-sectional view schematically showing the configuration of a second embodiment of the Fabry-Perot filter according to the present invention.
FIG. 28 is a cross-sectional view schematically showing the configuration of a third embodiment of the Fabry-Perot filter according to the present invention.
FIG. 29 is a cross-sectional view schematically showing the configuration of a fourth embodiment of the Fabry-Perot filter according to the present invention.
FIG. 30 is a cross-sectional view schematically showing the configuration of a fifth embodiment of the Fabry-Perot filter according to the present invention.
FIG. 31 is a cross-sectional view schematically showing the configuration of a sixth embodiment of the Fabry-Perot filter according to the present invention.

## DETAILED DESCRIPTION OF THE PREFERRED EMBODIMENTS

Preferred embodiments of the Fabry-Perot filter according to the present invention will now be described in detail with reference to the accompanying drawings.

I. First Embodiment of Fabry-Perot Filter

FIG. 10 is a cross-sectional view schematically showing the configuration of a first embodiment of the Fabry-Perot filter according to the present invention (claims 1 to 3).
Hereafter, it is assumed that the gas being measured is a gas containing two components, one of which is carbon dioxide whose peak wavelength of infrared absorption is approximately 4.25 μm, as shown in FIG. 11, and the other is water vapor whose peak wavelength of infrared absorption is approximately 2.7 μm, as shown in FIG. 12.
Fabry-Perot filters are normally designed in such a manner that the central wavelength ranges from 2700 nm (λ1) to 4250 nm (λ2) and the free spectral range FSR is greater than 4250 -2700 nm ($\lambda 2$ - $\lambda 1$) = 1550 nm.

A Fabry-Perot filter shown in FIG. 10 is designed so that the free spectral range FSR = 2000 nm, half-width HBW = 140 nm, maximum transmittance Tmax = 80% and Finesse = 14.

In FIG. 10, a fixed mirror 3 is formed on a silicon substrate 1 via an oxide layer 2 and a movable mirror 4 is formed on an oxide layer 5 deposited on the fixed mirror 3 and arranged opposite to the fixed mirror 3.

A gap h equivalent to the thickness of the oxide layer 5 is formed between the fixed mirror 3 and movable mirror 4, by etching the oxide layer 5 through etching holes 6 formed on the movable mirror 4. The movable mirror 4 can be displaced toward the fixed mirror 3 by applying external force.

The fixed mirror 3 and movable mirror 4 are made of, for example, polysilicon. A fixed electrode 7 is formed on the fixed mirror 3 by doping the surface thereof with a high-concentration impurity or impurities. Likewise, a movable electrode 8 is formed on the movable mirror 4 by doping the surface thereof with a high-concentration impurity or impurities.

An electrode pad 9 is formed on the fixed electrode 7 in contact therewith to enable the electrode to be electrified externally. Likewise, an electrode pad 10 is formed on the movable electrode 8 in contact therewith to enable the electrode to be electrified externally.

The central wavelength $\lambda$ of the Fabry-Perot filter thus configured is equivalent to the width of the gap **h**, i.e., the thickness of the oxide layer 5, and is 3100 nm, for example. Since the fixed mirror 3 serves as the lower mirror of the Fabry-Perot filter, the optical film thickness of the mirror must equal $\lambda/4$. In this embodiment, the oxide layer is 592 nm thick (refractive index = 1.309) and the layers of the fixed mirror 3 and movable mirror 4 are 248 nm thick (refractive index = 3.125).

Now, the behavior of the Fabry-Perot filter will be described.

FIGS. 13a, 13b and 13c are schematic views explaining the behavior of the Fabry-Perot filter shown in FIG. 10.

Once a potential difference is applied across the fixed electrode 7 and movable electrode 8 through the electrode pads 9 and 10, an electrostatic attraction force is produced between the fixed and movable electrodes. Thus, the movable mirror 4 is displaced toward the fixed mirror 3, thereby changing the width of the gap h. By varying the voltage thus applied, it is possible to know the width of a gap at which infrared radiation with wavelength bands corresponding to the absorption bands of the gas being measured are allowed to pass through the Fabry-Perot filter.

For example, let's assume that in FIG. 13a, the width of the gap **h** (i.e., the thickness of an isolation layer of approximately 3100 nm) in the non-electrified, initial state of the Fabry-Perot filter is when reference light is measured. Then, it is possible to use a change in the amount of transmitted light as data for correcting a change in the light source due to aging or contamination in the optical system.

The object to be measured can be switched to water vapor by adjusting the potential difference, so that the gap h is approximately 2590 nm, as shown in FIG. 13b. Likewise, the object can further be switched to carbon dioxide by adjusting the potential difference so that the gap **h** is approximately 2270 nm, as shown in FIG. 13c.

As described above, the gap h is made variable in three steps. Consequently, it is possible to realize a Fabry-Perot filter for selectively passing at least three wavelength bands of infrared radiation, including a wavelength band of reference light.

Now let's assume such a Fabry-Perot filter as described above is used with an infrared gas analyzer comprising a light source for emitting infrared radiation to the gas being measured, a wavelength-selective filter for passing the infrared radiation from the light source in a wavelength-selective way, and an infrared detector for detecting infrared radiation passing through the wavelength-selective filter, in order to determine the concentration of the gas being measured according to the output of the infrared detector. Then, it is possible to simultaneously measure the concentrations of two constituents of the gas being measured, without having to increase the number of wavelength-selective filters. Consequently, it is possible to reduce both the size and cost of the infrared gas analyzer.

It should be noted here that even for just one type of gas, the Fabry-Perot filter presents a plurality of transmission peaks in a plurality of wavelength bands, as shown in FIG. 14. For example, if the object being measured is carbon dioxide for which the gap h is set to 2270 nm, transmission peaks exist in the vicinity of 2400 nm and 4250 nm; if the object is water vapor for which the gap is set to 2590 nm, transmission peaks exist in the vicinity of 2700 nm and 4700 nm; and if the object is reference light for which the gap is set to 3100 nm, transmission peaks exist in the vicinity of 2200 nm and 3100 nm.

Accordingly, as shown in FIG. 15, a wide bandpass filter 12 for passing, for example, only the wavelength band of 2600 to 4500 nm and rejecting all other bands can be located before an infrared detector 14 in the optical path, so that only one peak is selected for each width of the gap. That is, as shown in FIG. 14, only a band of wavelengths in the vicinity of 4250 nm is selected for carbon dioxide for which the gap **h** is set to 2270 nm; only a band of wavelengths in the vicinity of 2700 nm is selected for water vapor for which the gap is set to 2590 nm; and only a band of wavelengths in the vicinity of 3100 nm is selected for reference light for which the gap is set to 3100 nm. Thus, the Fabry-Perot filter permits a plurality of gases to be measured with regard to the amount of absorption.

In the example of FIG. 15, the wide bandpass filter 12 is located between a light source 11 and a Fabry-Perot filter 13 in the optical path. Alternatively, the wide bandpass filter 12 may be located between the Fabry-Perot filter 13 and the infrared detector 14 in the optical path.

In this embodiment, only carbon dioxide and water vapor are mentioned as examples of the gas being measured. Now, it should be noted that design requirements for the Fabry-Perot filter are that the central wavelength thereof exist within the range from $\lambda 1$ to $\lambda 2$ and the free spectral range thereof be greater than $\lambda 2$ - $\lambda 1$, assuming the peak wavelengths of infrared absorption of two constituents are $\lambda 1$ (shorter wavelength) and $\lambda 2$ (longer wavelength). This means concentration measurement is also feasible for other constituent pairs, such as carbon dioxide and carbon monoxide, or nitrogen oxide and sulfur oxide.

It is commonly understood that the optical axes of the Fabry-Perot filter 13 and infrared detector 14 must be positioned so as to be in line with each other. In the case of the NDIR gas analyzer discussed above, however, the Fabry-Perot filter 13 and infrared detector 14 are two separate elements and are difficult to align precisely. Accordingly, instrument-to-instrument measurement errors may occur depending on the variance of alignment accuracy.

In order to increase the sensitivity of the infrared detector 14 and prevent the characteristics thereof from changing with time, the infrared detector 14 must be encapsulated in a package and the package must be vacuum-sealed or sealed with an inert gas inside.

In order to solve the above-noted problems, the Fabry-Perot filter is integrated with the infrared detector to form a wavelength-selective infrared detector. Embodiments of the wavelength-selective infrared detector according to the present invention (claims 6 to 14) are explained in detail hereafter.

i) First Embodiment of Wavelength-selective Infrared Detector

FIG. 16 is a cross-sectional view schematically showing the configuration of a first embodiment of the wavelength-selective infrared detector according to the present invention. Note that components identical to those of FIG. 10 are referenced alike.

In FIG. 16, an infrared detector 21 is integrated with a wavelength-selective (Fabry-Perot) filter 22 to form a wavelength-selective infrared detector.

The infrared detector 21 is, for example, a bolometer wherein a sealed cavity 23, infrared detector elements 24 formed therein, and electrodes 25a and 25b wherethrough the infrared detector 24 is electrified, are formed on a silicon substrate 26.

The infrared detector elements 24 are formed by spirally etching an conductive infrared detector layer 29 formed between isolation layers 27 and 28 consisting of silicon oxide layers that are deposited on the substrate 26. The infrared detector layer 29 is made of, for example, silicon with a high impurity concentration.

After a spacer layer 30 made of silicon is formed on the isolation layer 28, etching holes 31 are formed between the spacer layer 30 and isolation layer 28. Then, the sealed cavity 23 is formed by applying concentration-difference etching through the etching holes 31 to a portion of the substrate 26 underlying the infrared detector elements 24, whereby the elements are made afloat within the sealed cavity 23.

A sealing layer 32 made of silicon is formed on the spacer layer 30 by means of, for example, epitaxial growth, thereby closing the etching holes 31. In this process, the sealed cavity 23 is filled with hydrogen that serves as a carrier gas during epitaxial growth. The sealed cavity 23 is then heat-treated to drive the hydrogen out of the cavity so that a vacuum is formed therein. Consequently, the infrared detector elements 24 are vacuum-sealed inside the sealed cavity 23.

The wavelength-selective filter 22 is a Fabry-Perot filter, which is identical to the Fabry-Perot filter shown in FIG. 10 with regard to primary components and comprises a fixed mirror 3, a movable mirror 4 arranged opposite to the fixed mirror 3, a fixed electrode 7 formed on the fixed mirror 3 and a movable electrode 8 formed on the movable mirror 4. A gap 33 is formed between the fixed mirror 3 and movable mirror 4, wherein the movable mirror 4 can be displaced toward the fixed mirror 3.

As a first step in the process of fabricating the wavelength-selective filter 22, an isolation layer 34 made of silicon oxide is formed on the sealing layer 32 serving as a substrate. The fixed mirror 3, which is made of, for example, polysilicon, is then formed on the isolation layer 34. In the next step, a high concentration of impurity is doped onto the surface of the fixed mirror 3 to form the fixed electrode 7.

Another isolation layer 35 is formed on the fixed mirror 3, and the movable mirror 4, which is made of, for example, polysilicon, is formed on the isolation layer 35 so as to be opposite to the fixed mirror 3. On the surface of the movable mirror 4, the movable electrode 8 doped with a high concentration of impurity is formed so as to be opposite to the fixed electrode 7.

After forming etching holes 6 in the movable mirror 4, the isolation layer 35 is etched through the etching holes so that a gap 33, whose width is equivalent to the thickness of the isolation layer 35, is formed between the fixed mirror 3 and movable mirror 4. In this process, the movable mirror 4 is connected through the isolation layer 35 to the fixed mirror 3, taking the form of a cantilever. Alternatively, a plurality of etching holes 6 may be formed in a circular array in the movable mirror 4 to etch the isolation layer 35, so that the movable mirror 4 takes the form of a diaphragm.

The electrode pad 9 is formed on the fixed electrode 7 in contact therewith to enable the electrode to be electrified externally. Likewise, the electrode pad 10 is formed on the movable electrode 8 in contact therewith to enable the electrode to be electrified externally.

Now, the behavior of the wavelength-selective infrared detector will be described.

Once a potential difference is applied across the fixed electrode 7 and movable electrode 8 through the electrode pads 9 and 10, an electrostatic attraction force is produced between the fixed and movable electrodes. Thus, the movable mirror 4 is displaced toward the fixed mirror 3, thereby changing the width of the gap 33. By varying the voltage thus applied, it is possible to know the width of the gap 33 where infrared radiation with wavelength bands corresponding to the absorption bands of the gas being measured are allowed to pass through the wavelength-selective filter.

For example, let's assume that the width of the gap 33 (i.e., the thickness of the isolation layer 35) in the non-electrified state of the wavelength-selective filter is 3.1 μm and that this initial state is the mode of measuring reference light. Then, the object to be measured can be switched to carbon dioxide by setting the gap to approximately 2.27 μm. Likewise, the object can further be switched to water vapor by setting the gap to approximately 2.59 μm.

Infrared radiation emitted from a light source (not shown in the figure) enters a sample cell (not shown in the figure) whereinto the gas being measured is supplied, where only a specific band of wavelengths is absorbed and projected onto the movable mirror 4. Only the wavelength component among those of the projected infrared radiation corresponding to the width of the gap 33 passes through the fixed mirror 3 and enters the infrared detector elements 24 within the sealed cavity 23 of the infrared detector 21.

By detecting the amount of absorbed infrared radiation, the infrared detector elements 24 determine the concentration of the gas being measured.

ii) Second Embodiment of Wavelength-selective Infrared Detector

FIG. 17 is a cross-sectional view schematically showing the configuration of a second embodiment of the wavelength-selective infrared detector according to the present invention. Note that components identical to those of FIG. 16 are referenced alike and excluded from the description as necessary.

In FIG. 17a, an infrared detector 21 formed on a silicon substrate 26 serving as a first substrate and a waveform-selective filter 22 formed on a silicon substrate 1 serving as a second substrate are joined together to form a waveform-selective infrared detector.

The infrared detector 21 is, for example, a bolometer, wherein a cavity 36 serving as a sealed cavity, infrared detector elements 24 arranged in the cavity 36, and electrodes 25a and 25b for electrifying the infrared detector elements 24 are formed on the substrate 26.

The infrared detector elements 24 are formed by spirally etching an infrared detector layer 29 formed between isolation layers 27 and 28 that are deposited on the substrate 26. Then, the cavity 36 is formed by etching a portion of the substrate 26 underlying the infrared'detector elements 24 into the shape of a groove using a concentration difference method.

The wavelength-selective filter 22 is a Fabry-Perot filter wherein the fixed mirror 3, the movable mirror 4, the fixed electrode 7 located on the fixed mirror 3, and the movable electrode 8 located on the movable mirror 4 are formed on the substrate 1. Another cavity 37 is formed on the backside of the substrate 1.

The sealed cavity 23 is formed by directly joining together the substrate 26 whereon the infrared detector 21 is formed and the substrate 1 whereon the wavelength-selective filter 22 is formed, in a vacuum or inert gas atmosphere, with the cavities 36 and 37 opposed to each other. The infrared detector elements 24 are made afloat within the sealed cavity 23. In this process, the sealed cavity 23 is vacuum-sealed or sealed with an inert gas inside.

In FIG. 17b, the wavelength-selective infrared detector is configured in such a manner that the wavelength-selective filter 22 of the wavelength-selective infrared detector shown in FIG. 17a is positioned upside down. In this configuration, the infrared detector 21 and wavelength-selective filter 22 are joined together through the spacer layer 38 whereon the cavity 37 is formed and the cavity 23 is vacuum-sealed or sealed with an inert gas inside.

The electrode pad 9 is formed so that the fixed electrode 7 can be thereby electrified through an antireflection layer 39 deposited on the substrate 1, the substrate 1 and the isolation layer 2. Likewise, the electrode pad 10 is formed so that the movable electrode 8 can be thereby electrified through the antireflection layer 39, the substrate 1, the isolation layer 2, the fixed mirror 3 and the isolation layer 35.

Such wavelength-selective infrared detectors as described above and shown in FIGS. 16 and 17 are fabricated using a semiconductor manufacturing process that allows for precision alignment. This means it is possible to align the infrared detector 21 and wavelength-selective filter 22 with high precision, thereby reducing an instrument-to-instrument error.

Furthermore, the wavelength-selective infrared detectors are designed so that the gap 33 of the Fabry-Perot filter can be varied by changing a voltage applied across the fixed electrode 7 and movable electrode 8. Consequently, there is no need for increasing the number of filters even when a plurality of constituents in the gas being measured are included in the concentration measurement. Accordingly, it is possible to reduce both the size and cost of an infrared gas analyzer.

Yet another point to note here is that, in the process of manufacturing the infrared detector elements 24, the sealed cavity 23 is either vacuum-sealed or sealed with an inert gas inside. Consequently, there is no need for adopting any separate sealing process, thus permitting the cost of the infrared gas analyzer to be reduced.

iii) Third Embodiment of Wavelength-selective Infrared Detector

FIG. 18 is a cross-sectional view schematically showing the configuration of a third embodiment of the wavelength-selective infrared detector according to the present invention.

In FIG. 18, a wavelength-selective infrared detector comprises infrared detectors 21a, 21b and 21c and wavelength-selective filters 22a, 22b and 22c formed in arrays.

The infrared detectors 21a, 21b and 21c are formed in parallel on the substrate 26 like the infrared detector 21 shown in FIG. 17. Similarly, the wavelength-selective filters 22a, 22b and 22c are formed in parallel on the substrate 1 like the wavelength-selective filter 22 shown in FIG. 17.

Also like the infrared detector 21 shown in FIG. 17, infrared detector elements 24a, 24b and 24c are formed in the infrared detectors 21a, 21b and 21c. The fixed mirror 3 underneath the wavelength-selective filters 22a, 22b and 22c is formed so as to be common to the filters, and movable mirrors 4a, 4b and 4c are formed so as to be opposite to the fixed mirror 3.

In this configuration, assume that gaps 33a, 33b and 33c are formed between the fixed mirror 3 and the movable mirrors 4a, 4b and 4c so that the widths of the gaps differ from each other. Then, it is possible to fabricate the wavelength-selective filters 22a, 22b and 22c so that the filters pass only those bands of infrared radiation having the wavelengths $\lambda 1$, $\lambda 2$ and $\lambda 3$ corresponding to the widths.

Like the Fabry-Perot filter shown in FIG. 17, an array of wavelength-selective infrared detectors can be formed by directly joining the substrates 1 and 26 together in a vacuum or inert gas atmosphere. Alternatively, like the wavelength-selective infrared detector shown in FIG. 16, a plurality of infrared detectors and a plurality of wavelength-selective filters may be formed on the same substrate.

As described above, a plurality of wavelength-selective infrared detectors may be arranged in an array on a horizontal plane, and gaps of a plurality of wavelength-selective filters may be formed so that the initial widths thereof differ from each other. Alternatively, the width of a gap may be varied by changing an applied potential difference so that a plurality of constituents in a gas are measured. In either case, it becomes possible to measure multicomponent gases.

It should be noted here that even for just one type of gas, the Fabry-Perot filter presents a plurality of transmission peaks in a plurality of wavelength bands, as shown in FIG. 14.

Accordingly, as shown in FIG. 19, a wide bandpass filter 12 for admitting, for example, only the wavelength band of 2600 to 4500 nm and rejecting all other bands can be located in the optical path between a light source 11 and a wavelength-selective infrared detector 40. That is, as shown in FIG. 14, only a band of wavelengths in the vicinity of 4250 nm is selected for carbon dioxide for which the gap is set to 2270 nm; only a band of wavelengths in the vicinity of 2700 nm is selected for water vapor for which the gap is set to 2590 nm; and only a band of wavelengths in the vicinity of 3100 nm is selected for reference light for which the gap is set to 3100 nm. Thus, the Fabry-Perot filter permits a plurality of gases to be measured with regard to the amount of absorption.

Although in the description given above, the infrared detector is assumed to be a bolometer, the present invention is not hereto limited and may be embodied using other types of infrared detector, such as a vibrating infrared detector or a quantum infrared detector.

The variable-wavelength Fabry-Perot filter discussed above, however, has had the problems described in paragraphs A) to C) below.

A) In the variable-wavelength Fabry-Perot filter described above, the movable mirror 4 is formed using a single optical layer, as shown in FIG. 20. The fixed mirror 3 is built on the substrate 1. To be able to produce such a single-layer movable mirror 4, it is necessary to select layer forming material and conditions whereby the layer that forms the fixed mirror 4 will present tensile stress. For example, in order to form the movable mirror 4 using polysilicon, it is necessary to form a layer or dope the polysilicon with an impurity or impurities under the condition in which the polysilicon layer will present tensile stress. This method of forming layers has had the problems described in paragraphs 1 to 3 below, however.

1. The tensile stress of a layer varies depending on the film forming conditions and, therefore, stress control of layers becomes increasingly dependent on film forming apparatus. For example, when forming a polysilicon film using an LPCVD system, the film has tensile stress near 600°C but has compressive stress at temperatures below 570°C or above 620°C.

2. In order to use material having compressive stress, some structural measures (such as placing a frame around the film) must be taken. In addition, it is difficult for a film with a large area to stand by itself.

3. As explained in paragraphs 1 and 2 above, the stress design tolerance of self-supporting films is comparatively narrow. This means there is no choice but to select only a stress level that depends on the physical properties.

B) In the variable-wavelength Fabry-Perot filter described above, the width of the gap between the fixed and movable mirrors is controlled by applying a voltage across electrodes arranged opposite to each other and thereby producing a driving force. For this type of Fabry-Perot filter, it is not seldom that an overvoltage exceeding the given rating may be applied across the electrodes for reasons of static charges produced during operation. If any voltage above the rating is thus applied across the electrodes, the mirrors will approach too close to each other or come into contact with each other, resulting in dielectric breakdown and therefore short-circuit current flowing through the mirrors. Consequently, the mirrors may break or become fused, and the gap therebetween may not return to the original width even if the applied voltage is reset to zero. Alternatively, the mirrors may have hysteresis characteristics. In other words, wavelength discrimination may become infeasible or the originally designed characteristics of "applied voltage vs. transmission wavelength" may be impaired.

C) In the variable-wavelength Fabry-Perot filter described above, a sacrificial layer 41 located between the fixed mirror 3 and movable mirror 4 is etched through the etching holes 6 using an etching liquid, as shown in FIG. 21. This etching is discontinued when the sacrificial layer 41 is etched into a gap of desired size. Thus, an air gap 42 is formed between the fixed and movable mirrors. This method of forming gaps has had the problems described in paragraphs 1 to 3 below, however.

1. For reasons of the variance of etching rate due to the etching temperature, the service life of the etching liquid, or a difference in the concentration thereof, it is difficult to keep constant the size of the movable mirror (diaphragm) 4 formed by etching the sacrificial layer 41.

2. The gap is precisely position-controlled by means of an equilibrium between the force of electrostatic attraction produced by a voltage applied across the electrodes and the force of film tension. Accordingly, the applied voltage at which the desired gap is obtained differs from one diaphragm to another, as the size thereof also differs from one diaphragm to another. This means calibration must be performed from one diaphragm to another.

3. Since etching is discontinued halfway, it is difficult to keep constant the microscopic shape of the edges of the sacrificial layer 41. It is therefore likely that the above-mentioned applied voltage varies depending on the shape.

4. The sacrificial layer 41 lies across the almost entire surface of the substrate 1. If any pinhole occurs in the upper layer, a gap is formed in an unexpected location of the sacrificial layer 41 after etching. Consequently, a device failure may occur or dust may be produced.

Now, Fabry-Perot filters according to the present invention (claims 22 to 26) that have solved the problems discussed in paragraphs A) to C) will be described in detail.

According to the present invention (claims 22 to 26), a movable mirror is fabricated using a multilayer optical thin film formed by laminating layers that show tensile stress (tensile-stress layers) and layers that show compressive stress (compressive-stress layers) or formed by laminating tensile-stress layers that show different levels of tensile stress.

Tensile-stress and compressive-stress layers can be formed using such materials as polysilicon, silicon oxide or silicon nitride. Examples of possible combinations among tensile-stress and compressive-stress layers or among tensile-stress layers only include:

- Polysilicon compressive-stress layer and silicon nitride tensile-stress layer
- Polysilicon compressive-stress layer and silicon oxide tensile-stress layer
- Silicon oxide compressive-stress layer and polysilicon tensile-stress layer
- Silicon nitride compressive-stress layer and polysilicon tensile-stress layer
- Polysilicon tensile-stress layer and silicon nitride tensile-stress layer
- Polysilicon tensile-stress layer and silicon oxide tensile-stress layer

According to the present invention, the multilayer optical thin film (movable mirror) should preferably be a three-layer optical thin film formed by laminating a high refractive index layer F1, a low refractive index layer F2 and another high refractive index layer F3 in this order, as shown in FIG. 22. This structure permits the degree of film stress design to be heightened significantly. As specific examples of the above-mentioned three-layer optical thin film, there may be films structured as described in paragraphs a) to d) below.

a) A three-layer film consisting of a high refractive index layer Fl presenting compressive stress, a low refractive index layer F2 presenting tensile stress and a high refractive index layer F3 presenting compressive stress

b) A three-layer film consisting of a high refractive index layer F1 presenting tensile stress, a low refractive index layer F2 presenting compressive stress and a high refractive index layer F3 presenting tensile stress

c) A three-layer film consisting of a high refractive index layer Fl presenting a low tensile stress level, a low refractive index layer F2 presenting a high tensile stress level and a high refractive index layer F3 presenting a low tensile stress level

d) A three-layer film consisting of a high refractive index layer F1 presenting a high tensile stress level, a low refractive index layer F2 presenting a low tensile stress level and a high refractive index layer F3 presenting a high tensile stress level

Preferably, the multilayer optical thin film according to the present invention should have the optical thickness of λ/4 (k: wavelength); that is, the film should be a multilayer film equivalent to a single-layer film having the optical film thickness of λ/4. At this point, the three-layer film shown in FIG. 22 is optically equivalent to the single-layer film having the optical thickness of λ/4 if the three-layer film satisfies equation 2 below.

$$\lambda/4 = nd = n1d1 + n2d2 + n3d3 \qquad (2)$$

where

λ = Wavelength

n = Refractive index of single-layer film

d = Thickness of single-layer film

n1 = Refractive index of high refractive index layer Fl

d1 = Thickness of high refractive index layer F1

n2 = Refractive index of low refractive index layer F2

d2 = Thickness of low refractive index layer F2

n3 = Refractive index of high refractive index layer F3

d3 = Thickness of high refractive index layer F3

Assuming the membrane stress of each layer is σ1, σ2 and σ3 in a case where a three-layer film is used as the multilayer optical thin film (movable mirror), then the membrane stress a of the three-layer film as a whole is approximated by equation 3 below.

$$\sigma = (\sigma1d1 + a2d2 + \sigma3d3)/(d1 + d2 + d3) \qquad (3)$$

Let's assume here, for example, that the high refractive index layers F1 and F3 show compressive stress (σ1 and a3) and the low refractive index layer F2 shows tensile stress (a2). Then, by selecting the layer thicknesses of dl, d2 and d3, it is possible to design the membrane stress a of the three-layer film ranging from tensile stress to compressive stress.

Now, transmission characteristics (λ = 4.25 μm) are shown in FIG. 23 for comparison between cases when a single-layer film (polysilicon) is used for the movable mirror and when a three-layer film consisting of a high refractive index layer F1 (compressive stress: polysilicon), a low refractive index layer F2 (tensile stress: silicon nitride) and a high refractive index layer F3 (compressive stress: polysilicon) is used for the same.

Values used for graphing the transmission characteristics shown in FIG. 23 are as follows:

<u>**Single-layer film**</u>

n = 3.4245

d = 310 nm

σ = -100 MPa

<u>**Three-layer film**</u>

- High refractive index layer F1 (compressive stress; polysilicon)

  n1 = 3.4245

  d1 = 140 nm

  σ1 = -100 MPa

- Low refractive index layer F2 (tensile stress; silicon nitride)

  n2 = 2.05

  d2 = 50 nm

  a2 = 1000 MPa

- High refractive index layer F3 (compressive stress; polysilicon)

n3 = 3.4245

d3 = 140 nm

σ3 = -100 MPa

**Optical film thickness**

$$n1d1 + n2d2 + n3d3 = \lambda/4 = 4.25/4\ \mu m$$

**Membrane stress**

Tensile stress of 76 MPa

As is understood from FIG. 23, a Fabry-Perot filter using a three-layer movable mirror (see FIG. 24) and a Fabry-Perot filter using a single-layer movable mirror (see FIG. 25) share almost the same spectral characteristics. It is also understood that even a film, which if single-layered, is incapable of self-support (subject to buckling) due to compressive stress, will become capable of self-support if built with three layers. This is because the overall membrane stress of the film turns into tensile stress.

The present invention is not limited to the above-noted examples of a Fabry-Perot filter. For example, such applications, modifications and variations as described below may be considered possible.

1. A self-supporting movable mirror can be made either upward-convex or downward-convex by changing the thickness balance between the topmost and bottommost of three layers. A Fabry-Perot filter provided with an upward-convex movable mirror, such as one shown in FIG. 26, in particular, is advantageous since an effect of light containment can be expected and therefore the maximum transmission can be improved.

2. The thickness of a multilayer optical thin film may be set to 4/λ.

According to the present invention (claims 27 to 29), an isolation layer is located between fixed and movable electrodes. Although the location of the isolation layer is by no means limitative, the layer should be preferably located on the fixed electrode (see the embodiment described later). The material of the isolation layer is not limitative either, and may be made of, for example, silicon nitride or silicon oxide.

According to the present invention (claims 30 to 33), when forming a gap between the fixed and movable mirrors, a sacrificial layer of predetermined shape and size is first formed between the fixed and movable mirrors, and then the layer is removed completely by etching. For example, a sacrificial layer is formed so as to match the desired size of a movable mirror (diaphragm). Then, the movable mirror and other components are formed. Finally, the sacrificial layer is removed completely by wet etching through etching holes. Although dependent on the accuracy of etching during the formation of the sacrificial layer, the size of the diaphragm becomes no longer dependent on the etching accuracy when the sacrificial layer is being etched away. Consequently, it is possible to form a gap with higher precision. Although there are no restrictions on the shape of the sacrificial layer in this process, it is preferable that the vertical cross-section thereof be approximately trapezoid for the reason that the shape is effective for relaxing stress concentration.

It should be noted here that a multilayer optical thin film used in the present invention (claims 22 to 26) is also applicable to other optical devices than a Fabry-Perot filter.

Another point to note here is that the technical idea of the present invention (claims 27 to 29) is characteristic in that an isolation layer is located between electrodes so as to prevent the electrodes from being destroyed or fusing with each other if, for example, a voltage above the given rating is applied across the electrodes. This means the idea is also applicable to electrostatic actuators, as a whole, wherein at least two electrodes are arranged opposite to each other and a voltage is applied therebetween to produce a driving force. Yet another point to note here is that the technical idea is further applicable to optical devices as a whole, such as those which switch between optical paths by a driving reflective mirror using the above-noted electrostatic actuator.

The structure of the electrostatic actuator is simple, as the basic components thereof are two or more electrodes only. Consequently, the technical idea of the present invention encompasses a wide range of applications to electrostatic actuators in the field of marginal driving distances of μm to 1 mm. In the area of micro-machining technologies, in particular, it is possible to realize the electrostatic actuator of the present invention in a convenient and economical way.

Now, the embodiments of Fabry-Perot filters as defined in claims 22 to 33 of the present invention will be described in detail.

II. Second Embodiment of Fabry-Perot Filter

FIG. 27 is a cross-sectional view schematically showing the configuration of a second embodiment of the Fabry-Perot filter according to the present invention.

Note that the Fabry-Perot filter described herein adopts the technical ideas recited in claims 22 to 26 and claims 30 to 33 of the present invention. Also note that FIG. 27A represents the state of the Fabry-Perot filter before etching of a sacrificial layer, whereas FIG. 27B illustrates the state thereof after the etching.

In FIG. 27, a numeral 1 indicates a substrate, a numeral 3 indicates a fixed mirror, a numeral 4 indicates a movable mirror, a numeral 6 indicates etching holes, a numeral 7 indicates a fixed electrode, a numeral 8 indicates a movable electrode, a numeral 9 indicates an electrode pad, a numeral 10 indicates another electrode pad, a numeral 41 indicates an sacrificial layer, a numeral 42 indicates an air gap, a numeral 43 indicates an interlayer dielectric, a numeral 44 indicates an antireflection layer, a numeral 45 indicates a protection layer, a numeral 46 indicates an aperture, and a numeral 47 indicates an optical area.

The substrate 1 is made of material for admitting given transmitted wavelength bands, for example, silicon, sapphire or germanium. The fixed mirror 3 is made of a single-layer or multilayer film having the optical thickness one-fourth the central wavelength λ of the Fabry-Perot filter. One example of the multilayer film may be a film wherein high and low refractive index layers are formed using polysilicon and silicon oxide, respectively. The fixed electrode 7 is designed for electrostatic drive and formed, for example, by doping the polysilicon of the fixed mirror 3 with an impurity or impurities. The interlayer isolation layer 43 is designed to ensure isolation between the fixed electrode 7 and movable electrode 8 and made of, for example, silicon nitride.

The sacrificial layer 41 is a component used to form the air gap 42 that is necessary to configure the Fabry-Perot filter. By shaping and sizing the sacrificial layer so that a Fabry-Perot filter of desired size is fabricated, as well as shaping the vertical cross-section of the layer into a trapezoid, it is possible to secure the effect of relaxing stress concentration. The sacrificial layer 41 is made of such a substance as PSG or silicon oxide that can be removed using a fluoric-acid etchant.

The movable mirror 4 is a multilayer reflecting mirror that passes a specific band of wavelengths by means of interference with the fixed mirror

> 3. The movable mirror can be formed as a $Si/Si_3N_4/$ Si three-layer mirror, for example, using silicon for the high refractive index top and bottom layers and silicon nitride for the low refractive index middle layer. The movable electrode 8 is intended for electrostatic drive and formed, for example, by doping the silicon of the movable mirror 4 with an impurity or impurities. The etching holes 6 are formed to allow an etching liquid for etching the sacrificial layer 41 to enter therethrough. The etching holes are formed at the center and along the periphery of the movable mirror, thereby permitting the etching liquid to be easily diffused, displaced and dried out.

The antireflection layer 44 is intended to increase the transmittance of light passing through a substrate in a case where a substrate of high refractive index is used. The antireflection layer is made of a single layer or multiple layers having the optical thickness that permits the transmitted band of wavelengths to effectively pass therethrough. For example, the Fabry-Perot filter may use a combination of silicon and silicon oxide for the substrate 1 and antireflection layer 41, respectively. The protection layer 45 is intended to prevent the antireflection layer 44 from being attacked by an etching liquid when the sacrificial layer 41 is etched, and is made of, for example, silicon nitride.

The aperture 46 is a layer for regulating the optical area 47 and is made of, for example, a film of metal such as gold (Au). By etching the aperture 46, the optical area 47 is formed. The electrode pad 9 is a tapping pad of the fixed electrode 7 and is made of, for example, a film of metal such as gold (Au). The electrode pad 10 is a tapping pad of the movable electrode 8 and is made of, for example, a film of metal such as gold (Au). The air gap 42 is formed by etching the sacrificial layer 41 and serves as the distance of interference between the fixed and movable mirrors of the Fabry-Perot filter. The optical area 47 is part of the Fabry-Perot filter where light transmits. Note that the electrode pads 9 and 10 are located in a region external to the sacrificial layer 41.

In the case of the Fabry-Perot filter of the embodiment described herein, the sacrificial layer 41 that is removed by etching is regulated with regard to size. This means the movable mirror (diaphragm) 4 can be formed to a specific size even if the rate of etching varies. Consequently, it is possible to realize a Fabry-Perot filter having a variable gap of highly precise dimensions. Furthermore, since the movable mirror 4 is multi-layered, it is possible to broaden the stress design tolerance of a film composing the movable mirror 4, as well as reduce the dependency of the film upon film forming apparatus.

III. Third Embodiment of Fabry-Perot Filter

FIG. 28 is a cross-sectional view schematically showing the configuration of a third embodiment of the Fabry-Perot filter according to the present invention.

The Fabry-Perot filter described herein adopts the technical ideas recited in claims 22 to 26 of the present invention. Note that in FIG. 28, components identical to those of FIG. 27 are referenced alike and excluded from the explanation. In addition, the etching holes 6, which are otherwise be present at the center of the movable mirror 4, are omitted from the figure for the purpose of simplifying the drawing.

The Fabry-Perot filter of the third embodiment has a halfway-etched air gap 47 formed by controlling the etching time so that etching of the sacrificial layer 41 is discontinued halfway. In other words, the air gap 42 is formed by discontinuing etching of the sacrificial layer 41 in the second embodiment of the Fabry-Perot filter. This means, it is possible to fabricate Fabry-Perot filters of different sizes with different diaphragm diameters in the configuration of the second embodiment of the Fabry-Perot filter. Accordingly, in the third embodiment described herein, it is possible to fabricate Fabry-Perot filters of different sizes in just a single process. This is advantageous because, if the electrostatic drivel voltage changes due to the variance of stress in the movable mirror 4, such a change in the voltage can be regulated by optimizing the etching time and thereby also optimizing the diaphragm diameter.

IV. Fourth Embodiment of Fabry-Perot Filter

FIG. 29 is a cross-sectional view schematically showing the configuration of a fourth embodiment of the Fabry-Perot filter according to the present invention.

The Fabry-Perot filter described herein adopts the technical ideas recited in claims 22 to 31 of the present invention. Note that in FIG. 29, components identical to those of FIG. 27 are referenced alike and excluded from the explanation. In addition, the etching holes 6, which are otherwise be present at the center of the movable mirror 4, are omitted from the figure for the purpose of simplifying the drawing.

The Fabry-Perot filter of the fourth embodiment comprises an anti-fusion (isolation) layer 48 that prevents the fixed electrode 7 and movable electrode 8 from fusing with each other in case the two electrodes come into contact and is located on the fixed mirror 7. The anti-fusion layer 48 is made of, for example, silicon nitride. This anti-fusion layer is also adaptable to the filter configurations of the second and third embodiments. In an application where the Fabry-Perot filter is driven by applying an electrostatic drive voltage across the electrode pads 9 and 10, no overcurrent will turn on in the presence of the anti-fusion layer 48, even if a pull-in phenomenon occurs wherein the movable electrode 8 is attracted to the fixed electrode 7 and come into contact therewith. Consequently, it is possible to avoid suffering the problem that the movable electrode 8 adheres to the fixed electrode due to fusion or for any other reason and will not retire. The anti-fusion layer 48, even if located within the air gap 42, does not adversely affect electrostatic drive.

V. Fifth Embodiment of Fabry-Perot Filter

FIG. 30 is a cross-sectional view schematically showing the configuration of a fifth embodiment of the Fabry-Perot filter according to the present invention.

The Fabry-Perot filter described herein adopts the technical ideas recited in claims 22 to 29 of the present invention. Note that in FIG. 30, components identical to those of FIG. 27 are referenced alike and excluded from the explanation. In addition, the etching holes 6, which are otherwise be present at the center of the movable mirror 4, are omitted from the figure for the purpose of simplifying the drawing.

The Fabry-Perot filter of the fifth embodiment is fabricated in such a manner that in the fourth embodiment of the present invention, etching of the sacrificial layer 41 is discontinued halfway, as in the third embodiment, so that a halfway-etched air gap 49 is formed. This means it is possible to fabricate Fabry-Perot filters of different sizes with different diaphragm diameters in the filter configuration of the fourth embodiment. The Fabry-Perot filter of the fifth embodiment, therefore, has the same advantages as mentioned in the description of the third embodiment with regard to the halfway-etched air gap 49. In addition, like the fourth embodiment, the Fabry-Perot filter of the fifth embodiment comprises an anti-fusion (isolation) layer 48 that prevents the fixed electrode 7 and movable electrode 8 from fusing with each other in case the two electrodes come into contact and is located on the fixed mirror 7. The Fabry-Perot filter of the fifth embodiment, therefore, has the same advantages as mentioned in the description of the fourth embodiment with regard to the anti-fusion layer 48.

VI. Sixth Embodiment of Fabry-Perot Filter

FIG. 31 is a cross-sectional view schematically showing the configuration of a sixth embodiment of the Fabry-Perot filter according to the present invention.

The Fabry-Perot filter described herein adopts the technical ideas recited in claims 22 to 31 of the present invention. Note that in FIG. 31, components identical to those of FIG. 27 are referenced alike and excluded from the explanation. In addition, the etching holes 6, which are otherwise present at the center of the movable mirror 4, are omitted from the figure for the purpose of simplifying the drawing.

The Fabry-Perot filter of the sixth embodiment is fabricated in such a manner that in the second embodiment of the present invention, a backside protection layer laminated with protection layers 50 and 51 is formed in place of the protection layer 45. This backside protection layer is intended to protect the antireflection layer 44 when the sacrificial layer 41 is etched. The upper protection layer 50 is made of, for example, polysilicon and the lower protection layer 51 is made of, for example, silicon nitride. The backside protection layer in this embodiment is adaptable to any of the second to fifth embodiments.

If the metal-film aperture 46 is formed in contact with the protection layer 50, a residue of metal film may be produced when forming the optical area 47. In contrast, the aperture 46 does not come into contact with the protection layer 50 if the protection layer 51 is inserted between the protection layer 50 and aperture 46. Consequently, no metal film residue will be produced in the optical area 47 and, therefore, the transmittance of light will improve, if the protection layer 51 is removed by wet etching during the formation of the optical area 47 and then the protection layer 50 is also etched away.

It should be noted here that if the protection layer 45 is made of silicon nitride (second to fifth embodiments), the layer is also etched and the thickness thereof decreases as the sacrificial layer 41 is etched with a fluoric-acid etching liquid. This problem can be avoided, however, by inserting such a layer as a polysilicon layer, which is highly resistant to fluoric acids, as the protection layer 50. Consequently, the protection layer 50 serves as an etching stopper layer, thus preventing the antireflection layer 44 from being attacked by fluoric acid even if the silicon-nitride protection layer 51 is etched. The polysilicon composing the protection layer 50 can be easily removed by dry etching after the sacrificial layer 41 is etched, with the aperture 46 serving as the mask.

By employing such a backside protection layer of polysilicon/silicon nitride structure as described in the sixth embodiment, it is possible to protect the antireflection layer 44 from attack by an etching liquid even for longer periods of etching time. In the filter configuration of this embodiment, it is also possible to completely remove part of the protection layer 45 present in the optical area 47 and thereby improve the transmittance of light, compared with the second to fifth embodiments wherein a small portion of the protection layer 45 will unavoidably remain in the optical area 47.

## ADVANTAGEOUS EFFECTS OF THE INVENTION

As described above, in one aspect of the present invention the width of a gap is made to be variable in three steps. Consequently, it is possible to realize a Fabry-Perot filter for selectively admitting three wavelength bands of infrared radiation, including a wavelength band of reference light.

In another aspect of the present invention, the infrared gas analyzer of the present invention uses the Fabry-Perot filter of the present invention. Consequently, it is possible to simultaneously measure the concentrations of two constituents of the gas being measured, without having to increase the number of wavelength-selective filters. Thus, it is also possible to reduce both the size and cost of the infrared gas analyzer.

In yet another aspect of the present invention, the infrared gas analyzer uses the Fabry-Perot filter of the present invention and comprises a wide bandpass filter for admitting only a specific band of wavelengths. Consequently, it is possible to provide an infrared gas analyzer capable of measuring the concentrations of a plurality of gases by selecting only one peak for each width of a gap.

In yet another aspect of the present invention, a wavelength-selective filter and an infrared detector are integrated into one component, thereby ensuring the accuracy of fabrication. Consequently, it is possible to provide a small-sized, low-cost infrared gas analyzer.

In yet another aspect of the present invention, wavelength-selective infrared detectors are arranged in arrays. Consequently, it is possible to provide an infrared gas analyzer capable of measuring the concentrations of a multicomponent gas.

In yet another aspect of the present invention, the infrared gas analyzer uses the wavelength-selective infrared detector of the present invention. Consequently, it is possible to provide a small-sized, low-cost infrared gas analyzer.

In yet another aspect of the present invention, the infrared gas analyzer uses the wavelength-selective infrared detector of the present invention and comprises a wide bandpass filter for transmitting only a specific band of wavelengths. Consequently, it is possible to provide an infrared gas analyzer capable of measuring the concentrations of a plurality of gases by selecting only one peak for each width of a gap.

Another point to note here is that the Fabry-Perot filter of the present invention is configured in such a manner that it is possible to broaden the stress design tolerance of a film composing the movable mirror, as well as reduce the dependency of the film upon film forming apparatus.

Yet another point to note about the Fabry-Perot filter of the present invention is that it is possible to prevent mirrors from being destroyed or fusing with each other in case, for example, a voltage above the given rating is applied across the mirrors.

Yet another point to note about the Fabry-Perot filter of the present invention is that it is possible to keep constant the size of a movable mirror (diaphragm) with high precision and, therefore, reduce the mirrorto-mirror variance of voltage at which desired widths of a gap are obtained.

## Claims

**1.** A Fabry-Perot filter for passing infrared radiation from a light source in a wavelength-selective way, comprising:

a fixed mirror formed on a substrate;

a movable mirror arranged opposite to said fixed mirror with a gap formed therebetween, so that said movable mirror can be displaced with respect to said fixed mirror by applying external force;

a fixed electrode formed on said fixed mirror; and

a movable electrode formed on said movable mirror and arranged opposite to said fixed electrode;

wherein said movable mirror is displaced by applying a potential difference across said fixed electrode and said movable electrode so that the width of said gap can be varied in at least three steps, whereby at least three wavelength bands of said infrared radiation are selectively transmitted through said Fabry-Perot filter.

**2.** The Fabry-Perot filter of claim 1, wherein said fixed mirror and said movable mirror are made of silicon.

**3.** The Fabry-Perot filter of claim 1, wherein said fixed electrode and said movable electrode are made of silicon with a high impurity concentration.

**4.** An infrared gas analyzer for determining the concentration of a gas being measured according to the output of an infrared detector, comprising:

a light source for emitting infrared radiation to said gas being measured;
a wavelength-selective filter for passing said infrared radiation from said light source in a wavelength-selective way; and
an infrared detector for detecting infrared radiation passing through the wavelength-selective filter;

wherein said wavelength-selective filter is configured using the Fabry-Perot filter of any of claims 1 to 3.

**5.** An infrared gas analyzer for determining the concentration of a gas being measured according to the output of an infrared detector, comprising:

a light source for emitting infrared radiation to said gas being measured;
a wavelength-selective filter for passing said infrared radiation from said light source in a wavelength-selective way; and
an infrared detector for detecting infrared radiation passing through said wavelength-selective filter;

wherein said wavelength-selective filter is configured using the Fabry-Perot filter of any of claims 1 to 3, is located before said infrared detector in the optical path, and comprises a wide bandpass filter for passing only a specific band of wavelengths.

**6.** A wavelength-selective infrared detector, wherein a wavelength-selective filter for passing infrared radiation from a light source in a wavelength-selective way and an infrared detector having infrared detector elements for detecting infrared radiation passing through said wavelength-selective filter are formed on the same substrate.

**7.** The wavelength-selective infrared detector of claim 6, wherein said infrared detector elements are located in a sealed cavity formed in said substrate and said wavelength-selective filter is formed on said sealed cavity so that said sealed cavity is vacuum-sealed or sealed with an inert gas inside.

**8.** A wavelength-selective infrared detector, comprising:

a wavelength-selective filter formed on a first substrate to pass infrared radiation from a light source in a wavelength-selective way;
and
an infrared detector formed on a second substrate and having infrared detector elements for detecting infrared radiation passing through said wavelength-selective filter;

wherein said first substrate and said second substrate are joined together.

**9.** The wavelength-selective infrared detector of claim 8, wherein said infrared detector elements are located within a groove-shaped part formed in said second substrate so as to form a sealed cavity and said first substrate and said second substrate are joined together in a vacuum or inert gas atmosphere so that said wavelength-selective filter is positioned on said groove-shaped part to form said sealed cavity, whereby said sealed cavity is vacuum-sealed or sealed with an inert gas inside.

**10.** The wavelength-selective infrared detector of any of claims 6 to 9, wherein said wavelength-selective filter is a Fabry-Perot filter comprising a fixed mirror located on a substrate and a movable mirror arranged opposite to said fixed mirror so that a gap is formed therebetween and said movable mirror can be displaced with respect to said fixed mirror by applying external force.

**11.** The wavelength-selective infrared detector of any of claims 6 to 9, wherein said wavelength-selective filter is a Fabry-Perot filter comprising a fixed mirror formed on a substrate, a movable mirror arranged opposite to said fixed mirror with a gap formed therebetween so that said movable mirror can be displaced with respect to said fixed mirror by applying external force, a fixed electrode formed on said fixed mirror, and a movable electrode formed on said movable mirror and arranged opposite to said fixed electrode, whereby said movable mirror can be displaced by applying a potential difference across said fixed electrode and said movable electrode and thereby the width of said gap can be varied.

**12.** The wavelength-selective infrared detector of claim 11, wherein said Fabry-Perot filter is configured so that said gap can be varied in a plurality of steps by applying a plurality of voltage levels across said fixed electrode and said movable electrode, whereby said Fabry-Perot filter can pass a plurality of wavelength bands of infrared radiation.

**13.** The wavelength-selective infrared detector of any of claims 6 to 12, wherein said infrared detector is an infrared bolometer.

**14.** The wavelength-selective infrared detector of any of claims 6 to 13, wherein a plurality of said wavelength-selective filters and a plurality of said infrared detectors are horizontally arranged in arrays.

**15.** An infrared gas analyzer for determining the concentration of a gas being measured according to the output of an infrared detector, comprising:

a light source for emitting infrared radiation to said gas being measured;
a wavelength-selective filter for passing infrared radiation from said light source in a wavelength-selective way; and
an infrared detector for detecting infrared radiation passing through said wavelength-selective filter;

wherein said wavelength-selective filter and said infrared detector are configured using the wavelength-selective infrared detector of any of claims 6 to 14.

**16.** An infrared gas analyzer for determining the concentration of a gas being measured according to the output of an infrared detector, comprising:

a light source for emitting infrared radiation to said gas being measured;
a wavelength-selective filter for passing said infrared radiation from said light source in a wavelength-selective way; and
an infrared detector for detecting infrared radiation passing through said wavelength-selective filter;

wherein said wavelength-selective filter and said infrared detector are configured using the wavelength-selective infrared detector of any of claims 6 to 14 and said infrared gas analyzer further comprises a wide bandpass filter located between said wavelength-selective infrared detector and said light source so as to pass only a specific band of wavelengths.

**17.** The infrared gas analyzer of any of claims 4, 5, 15 and 16, wherein said gas being measured contains carbon dioxide and water vapor and the concentrations of the two constituents are measured.

**18.** The infrared gas analyzer of any of claims 4, 5, 15 and 16, wherein said gas being measured contains carbon dioxide and carbon monoxide and the concentrations of the two constituents are measured.

**19.** The infrared gas analyzer of any of claims 4, 5, 15 and 16, wherein said gas being measured contains nitrogen oxide and sulfur oxide and the concentrations of the two constituents are measured.

**20.** The infrared gas analyzer of any of claims 4, 5, 15 and 16, wherein said gas being measured contains carbon dioxide and nitrogen oxide and the concentrations of the two constituents are measured.

**21.** The infrared gas analyzer of any of claims 4, 5, 15 and 16, wherein said gas being measured contains carbon dioxide and sulfur oxide and the concentrations of the two constituents are measured.

**22.** A Fabry-Perot filter having a fixed mirror and a movable mirror arranged opposite to said fixed mirror with a gap formed therebetween, the width of said gap being variable by displacing said movable mirror with respect to said fixed mirror, wherein said movable mirror is formed using a multilayer optical thin film produced by laminating at least one layer presenting tensile stress and at least one layer presenting compressive stress.

**23.** A Fabry-Perot filter having a fixed mirror and a movable mirror arranged opposite to said fixed mirror with a gap formed therebetween, the width of said gap being variable by displacing said movable mirror with respect to said fixed mirror, wherein said movable mirror is formed using a multilayer optical thin film produced by laminating at least two layers presenting mutually different levels of tensile stress.

**24.** The Fabry-Perot filter of claim 22 or 23, wherein said multilayer optical thin film is a three-layer optical thin film produced by laminating a high refractive index layer, a low refractive index layer and another high refractive index layer, in this order.

**25.** The Fabry-Perot filter of claim 24, wherein said multilayer optical thin film is a three-layer optical thin film having a structure among structures **a** to **d** defined as:

a) a structure wherein said multilayer optical thin film is produced by laminating a high refractive index layer presenting compressive stress, a low refractive index layer presenting tensile stress and another high refractive index layer presenting compressive stress, in this order;

b) a structure wherein said multilayer optical thin film is produced by laminating a high refractive index layer presenting tensile stress, a low refractive index layer presenting compressive stress and another high refractive index layer presenting tensile stress, in this order;

c) a structure wherein said multilayer optical thin film is produced by laminating a high refractive index layer presenting a low tensile stress level, a low refractive index layer presenting a high tensile stress level and another high refractive index layer presenting a low tensile stress level, in this order; and

d) a structure wherein said multilayer optical thin film is produced by laminating a high refractive index layer presenting a high tensile stress level, a low refractive index layer presenting a low tensile stress level and another high refractive index layer presenting a high tensile stress level, in this order.

**26.** The Fabry-Perot filter of any of claims 22 to 25, wherein the thickness of said multilayer optical thin film is $\lambda/4$ ($\lambda$: wavelength).

**27.** A Fabry-Perot filter having a fixed mirror and a movable mirror arranged opposite to said fixed mirror with a gap formed therebetween, a fixed electrode formed on said fixed mirror, and a movable electrode formed on said movable mirror, the width of said gap being variable by displacing said movable mirror with respect to said fixed mirror, wherein an isolation layer is located between said fixed electrode and said movable electrode.

**28.** The Fabry-Perot filter of claim 27, wherein an isolation layer is formed on said fixed electrode.

**29.** The Fabry-Perot filter of claim 27 or 28, wherein said isolation layer is made of silicon nitride or silicon oxide.

**30.** A Fabry-Perot filter having a fixed mirror formed on a substrate and a movable mirror arranged opposite to said fixed mirror with a gap formed therebetween, the width of said gap being variable by displacing said movable mirror with respect to said fixed mirror, wherein said gap is formed by depositing a sacrificial layer of predetermined shape and size between said fixed mirror and said movable mirror and then removing said sacrificial layer completely or partially by means of etching.

**31.** The Fabry-Perot filter of claim 30, wherein the vertical cross-section of said sacrificial layer is approximately trapezoid and electrode pads for tapping said movable electrode and said fixed electrode are formed in a region outside said sacrificial layer.

**32.** The Fabry-Perot filter of claim 30 or 31, further comprising an antireflection layer formed on the backside of said substrate and a metal aperture formed on said antireflection layer through a protection layer and having an optical area in part, wherein said sacrificial layer is first removed by etching and then a portion of said protection layer present in said optical area is likewise removed.

**33.** The Fabry-Perot filter of claim 30 or 31, further comprising etching holes formed at the center and along the periphery of said movable mirror in order to etch said sacrificial layer.

FIG.1

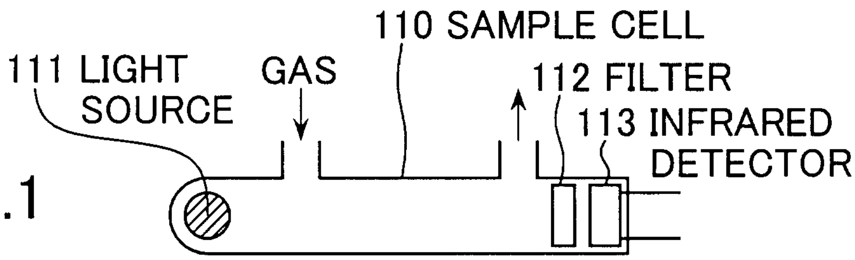


FIG.2

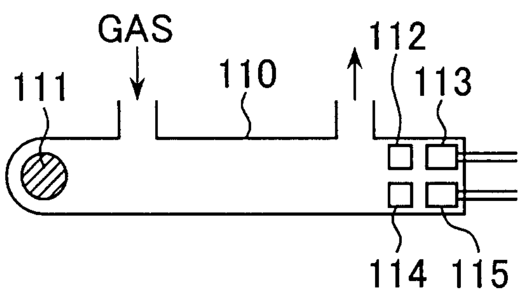


FIG.3

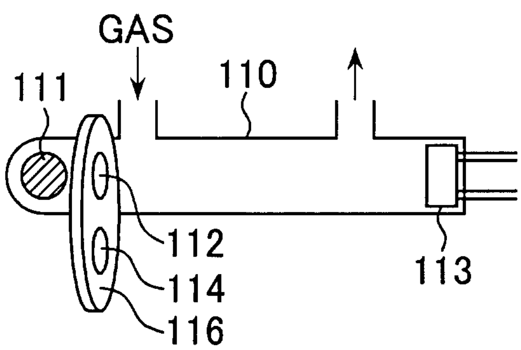


FIG.4

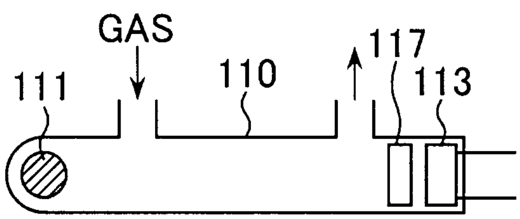


FIG.5

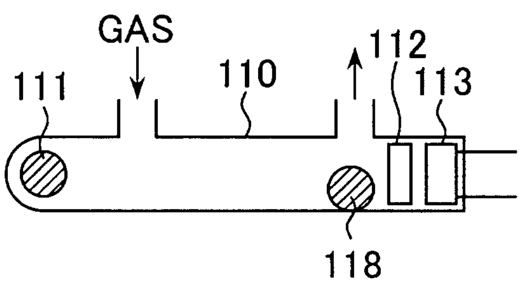

FIG.6

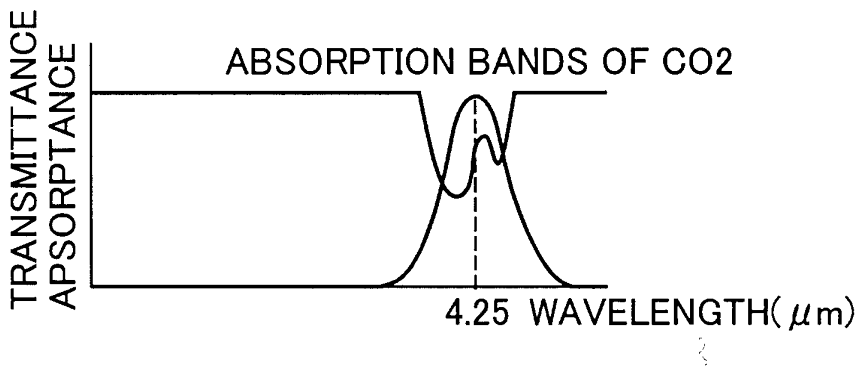


FIG.7

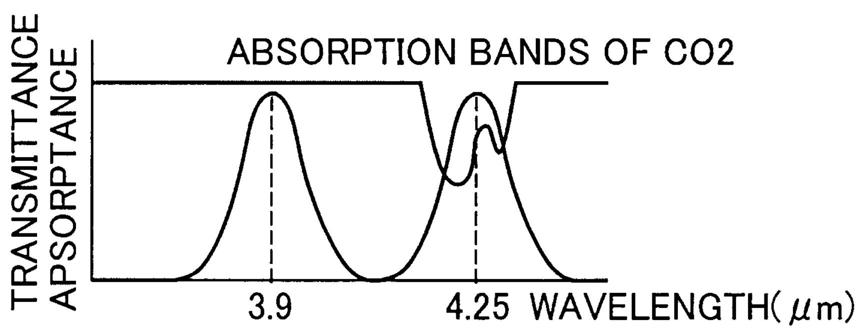


FIG.8

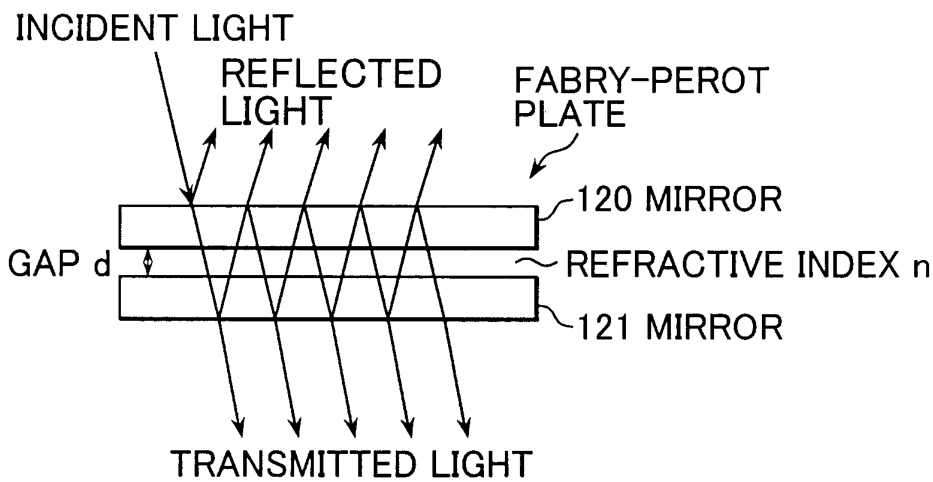

FIG.9

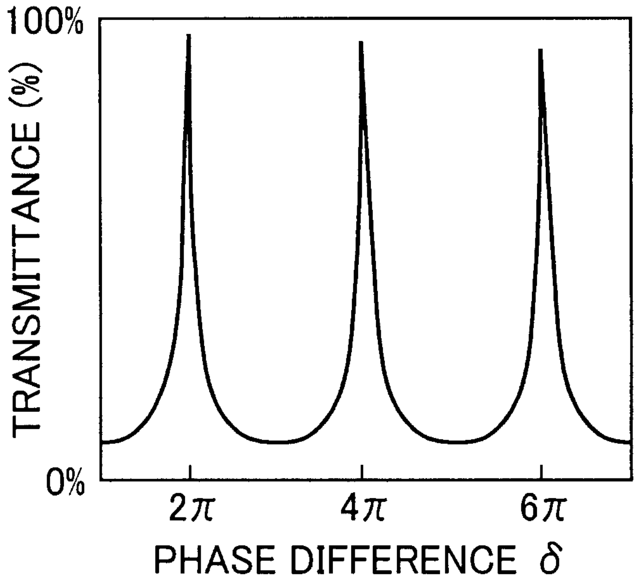
100%
0%
TRANSMITTANCE (%)
2π
4π
6π
PHASE DIFFERENCE δ

FIG.10

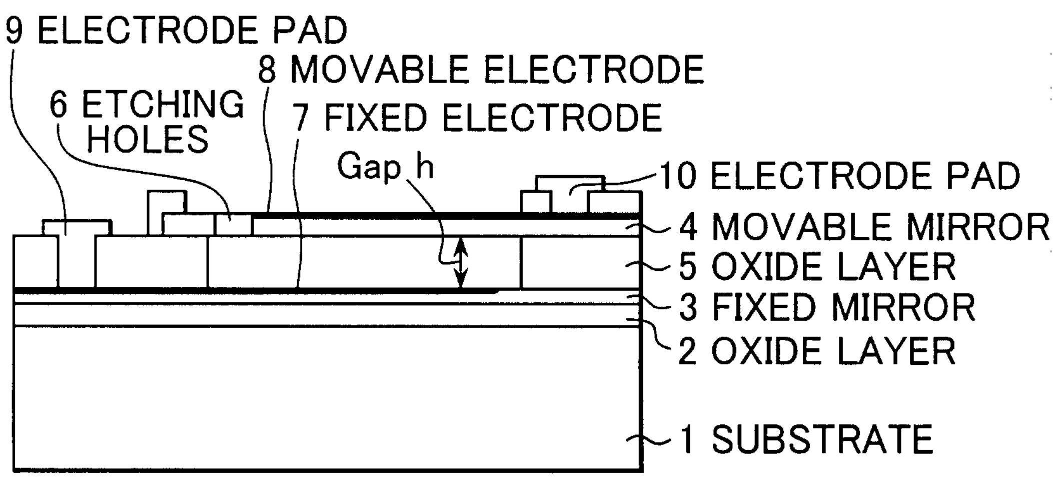
9 ELECTRODE PAD
8 MOVABLE ELECTRODE
6 ETCHING HOLES
7 FIXED ELECTRODE
Gap h
10 ELECTRODE PAD
4 MOVABLE MIRROR
5 OXIDE LAYER
3 FIXED MIRROR
2 OXIDE LAYER
1 SUBSTRATE

FIG.11

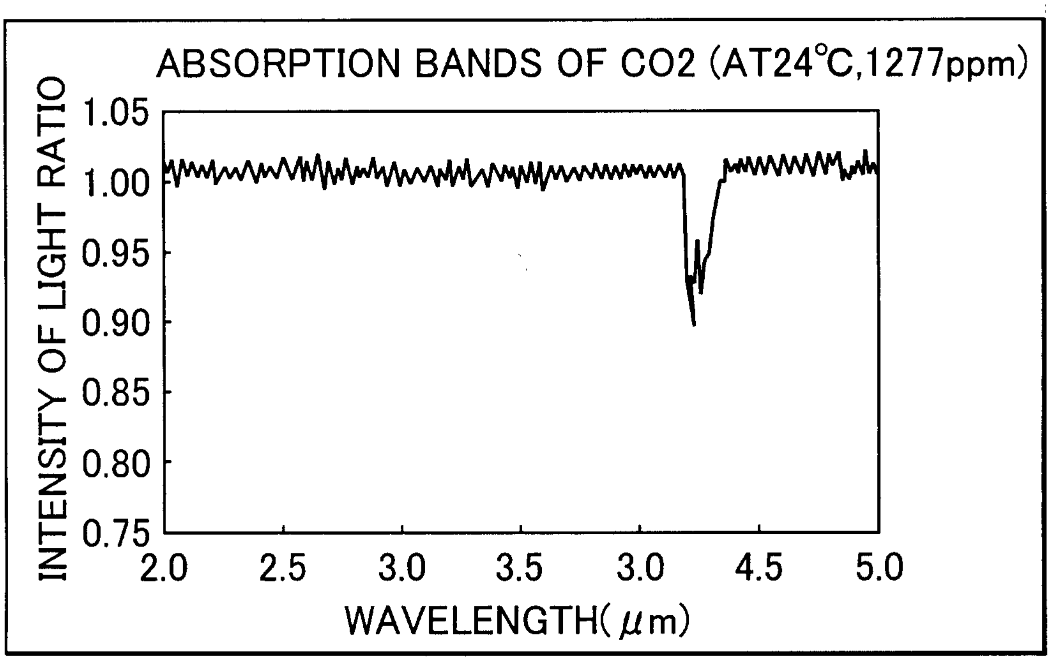
ABSORPTION BANDS OF CO2 (AT24°C,1277ppm)
INTENSITY OF LIGHT RATIO
1.05
1.00
0.95
0.90
0.85
0.80
0.75
2.0
2.5
3.0
3.5
3.0
4.5
5.0
WAVELENGTH(μm)

FIG.12

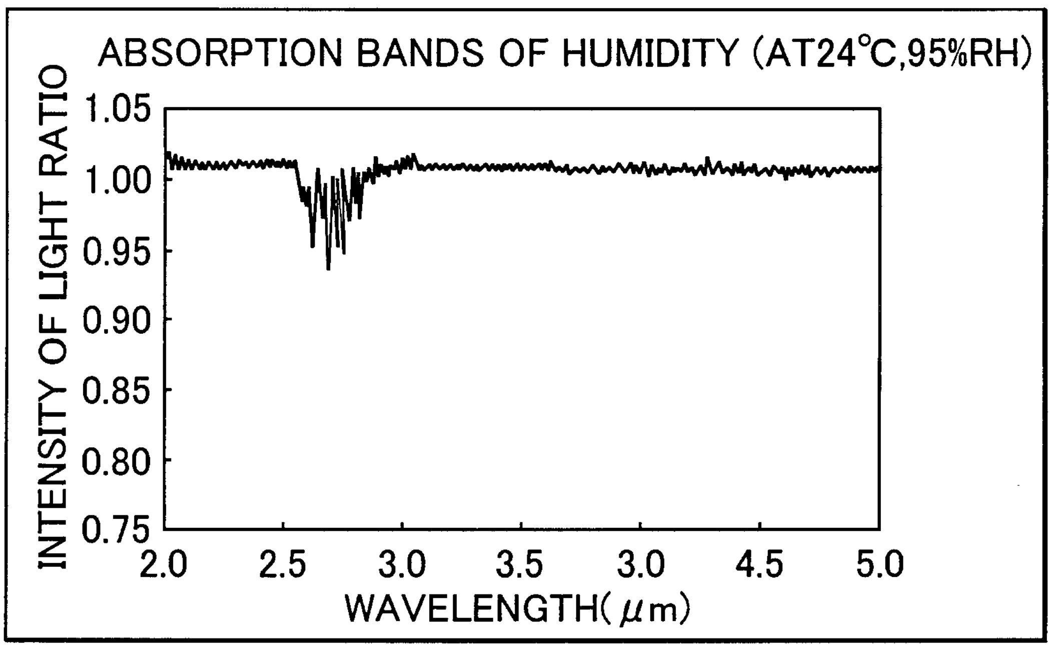
ABSORPTION BANDS OF HUMIDITY (AT24°C,95%RH)
INTENSITY OF LIGHT RATIO
1.05
1.00
0.95
0.90
0.85
0.80
0.75
2.0
2.5
3.0
3.5
3.0
4.5
5.0
WAVELENGTH(μm)

FIG.13A

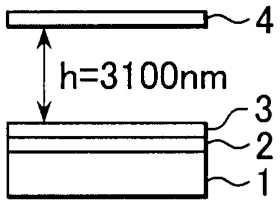


FIG.13B

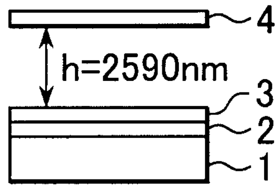


FIG.13C

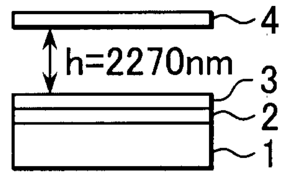


FIG.14

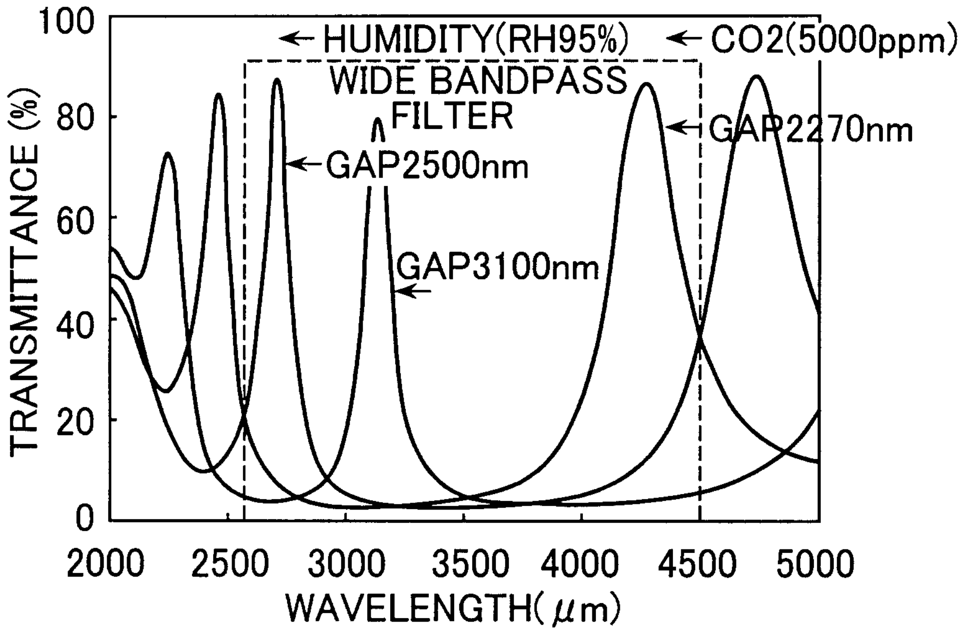


FIG.15

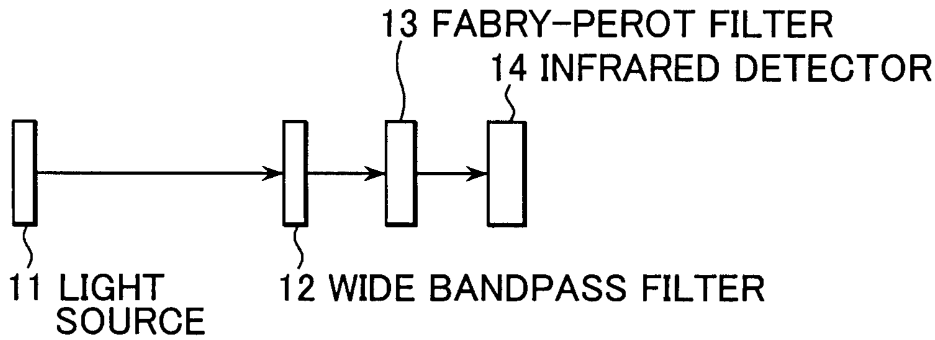

FIG.16

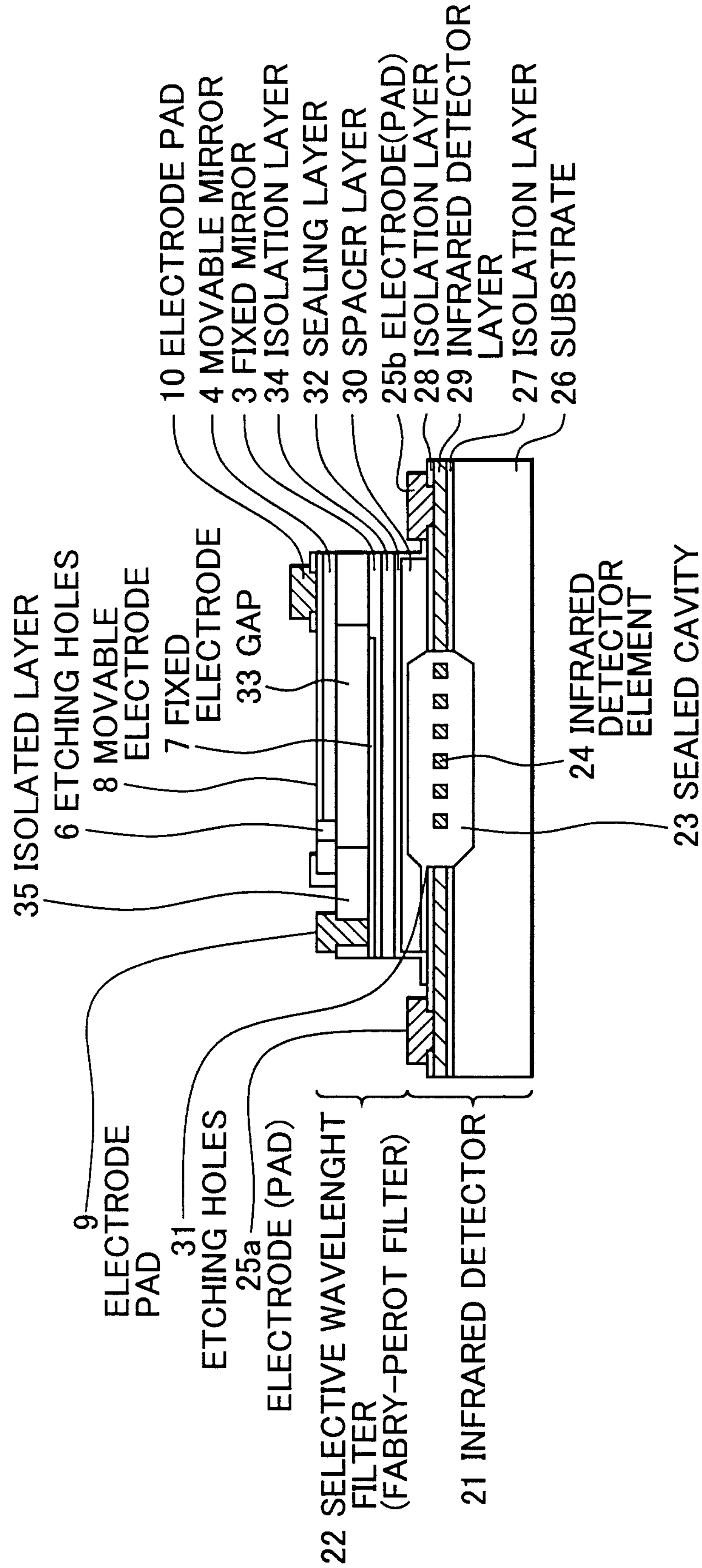
35 ISOLATED LAYER
6 ETCHING HOLES
8 MOVABLE ELECTRODE
7 FIXED ELECTRODE
33 GAP
10 ELECTRODE PAD
4 MOVABLE MIRROR
3 FIXED MIRROR
34 ISOLATION LAYER
32 SEALING LAYER
30 SPACER LAYER
25b ELECTRODE(PAD)
28 ISOLATION LAYER
29 INFRARED DETECTOR LAYER
27 ISOLATION LAYER
26 SUBSTRATE
24 INFRARED DETECTOR ELEMENT
23 SEALED CAVITY
9 ELECTRODE PAD
31 ETCHING HOLES
25a ELECTRODE (PAD)
22 SELECTIVE WAVELENGHT FILTER (FABRY-PEROT FILTER)
21 INFRARED DETECTOR

# FIG.17A

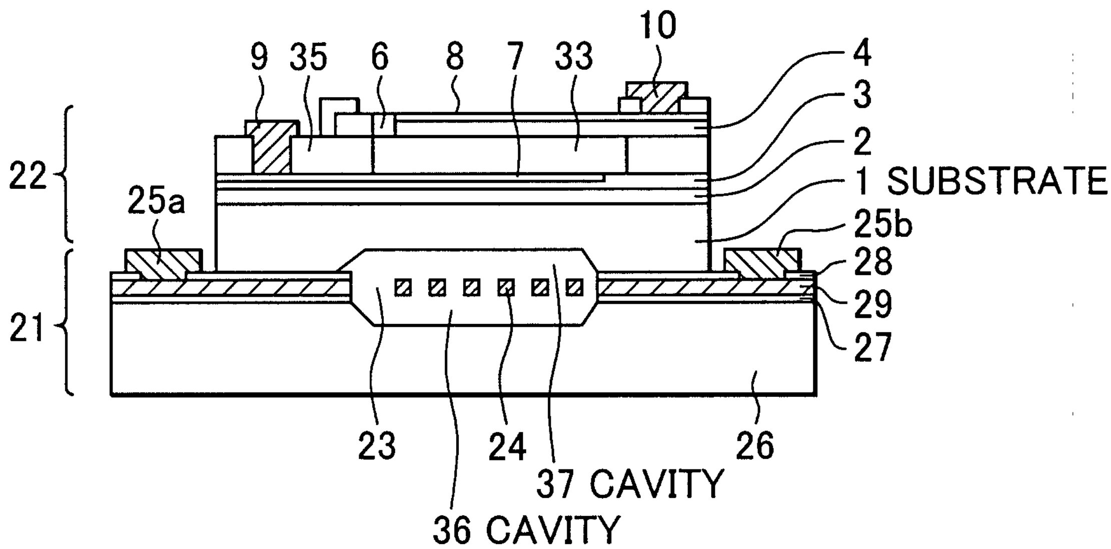


# FIG.17B

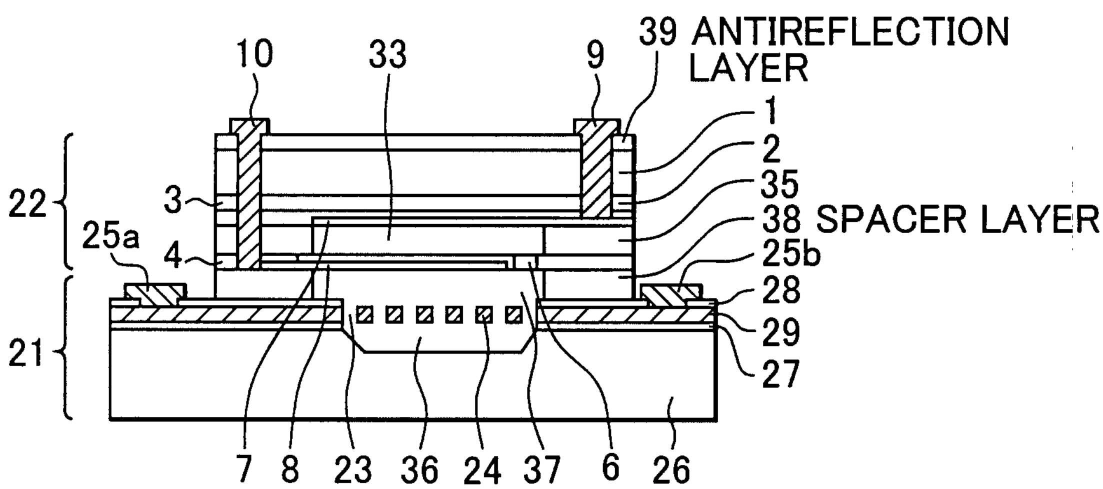

FIG.18

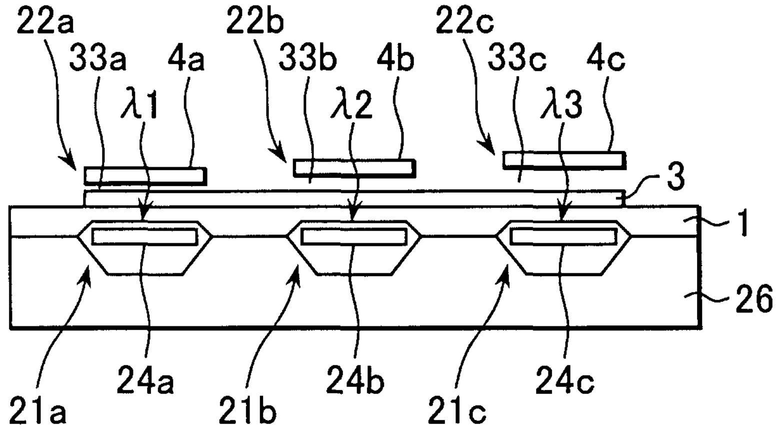


FIG.19

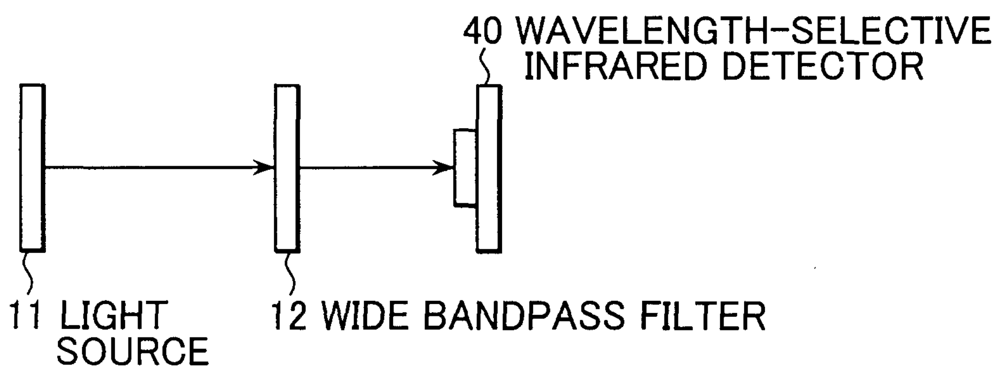


FIG.20

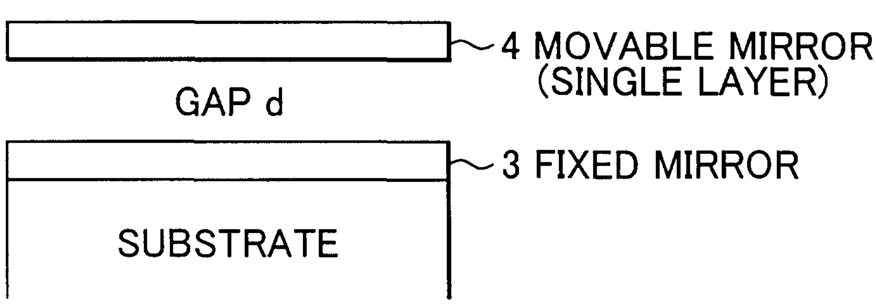

FIG.21

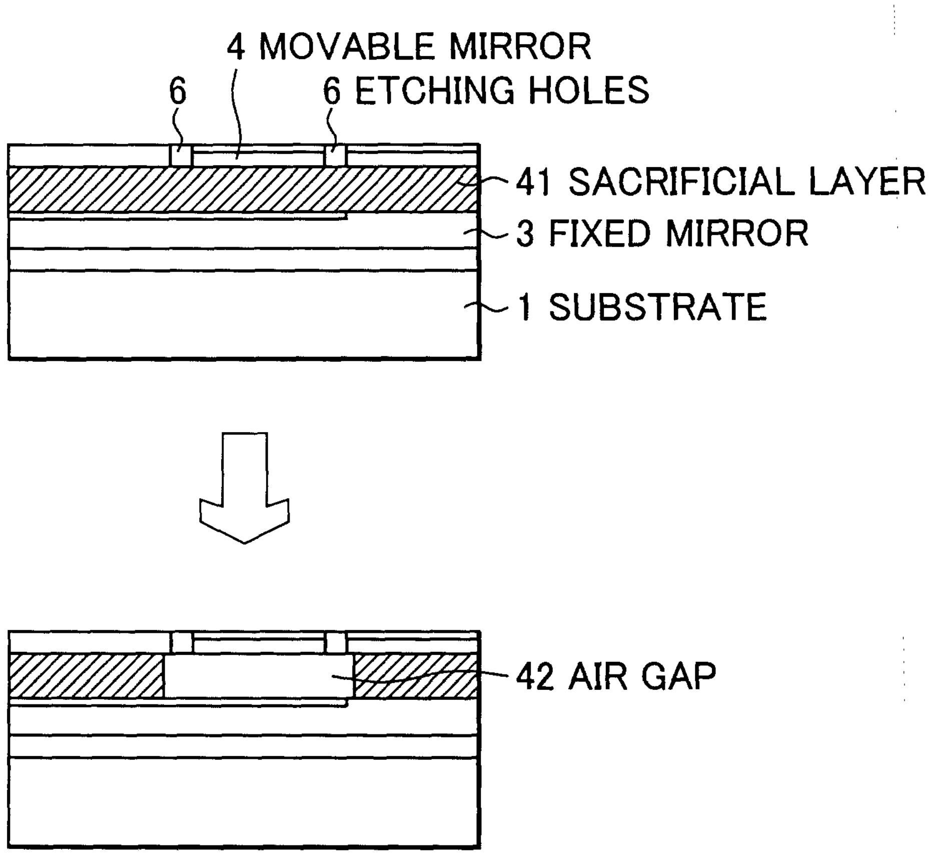
4 MOVABLE MIRROR
6
6 ETCHING HOLES
41 SACRIFICIAL LAYER
3 FIXED MIRROR
1 SUBSTRATE
42 AIR GAP

FIG.22

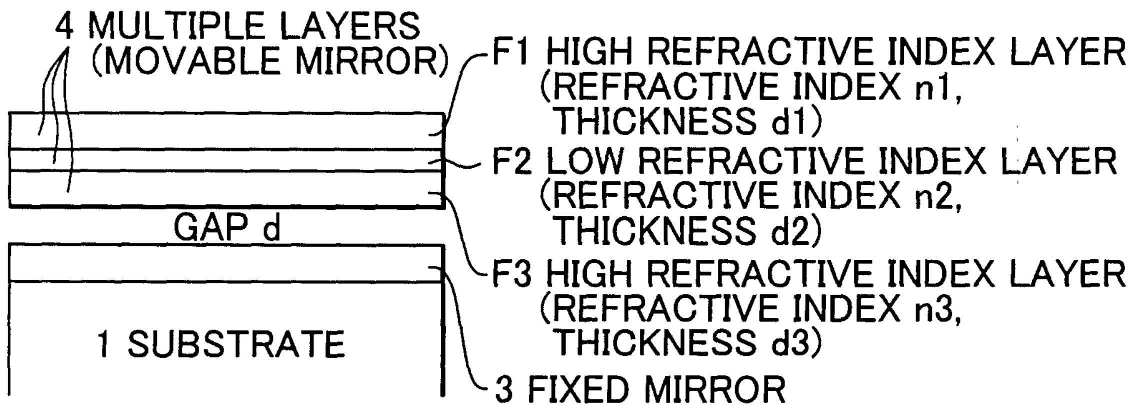
4 MULTIPLE LAYERS (MOVABLE MIRROR)
F1 HIGH REFRACTIVE INDEX LAYER (REFRACTIVE INDEX n1, THICKNESS d1)
F2 LOW REFRACTIVE INDEX LAYER (REFRACTIVE INDEX n2, THICKNESS d2)
F3 HIGH REFRACTIVE INDEX LAYER (REFRACTIVE INDEX n3, THICKNESS d3)
GAP d
1 SUBSTRATE
3 FIXED MIRROR

FIG.23

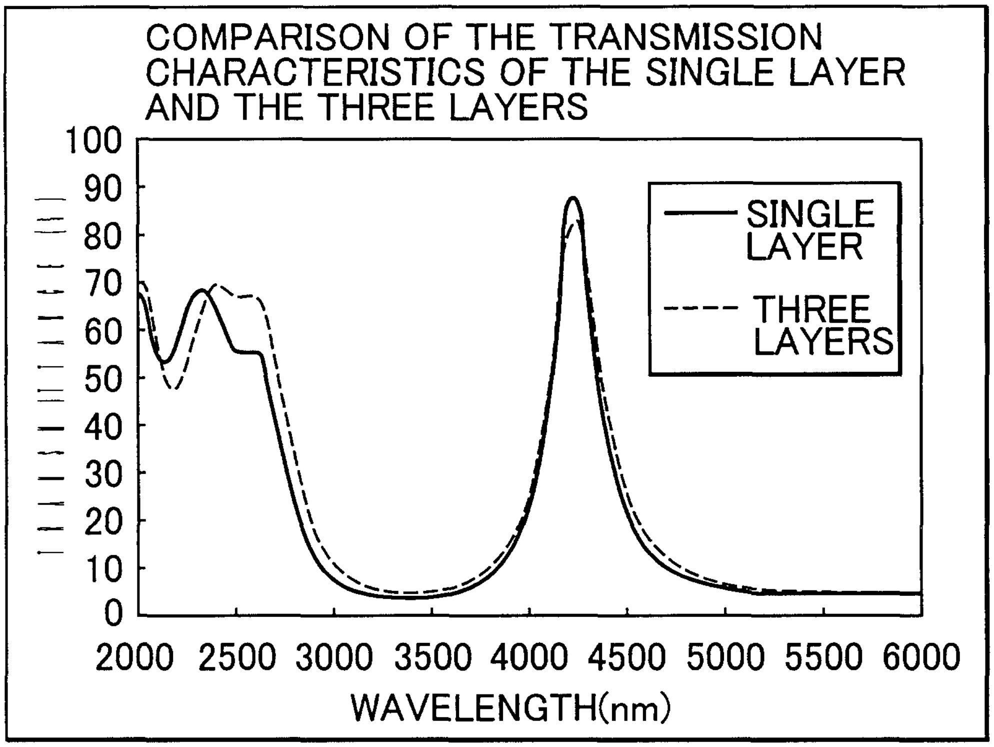


FIG.24

AIR/POLYSi/SiN/POLYSi/AIR/POLYSi/SiO2/Si SUBSTRATE/SiO2/AIR

| ← MOVABLE MIRROR → | | ← FIXED MIRROR → | ← SUBSTRATE +AIR |

FIG.25

AIR/POLYSi/AIR/POLYSi/SiO2/Si SUBSTRATE/SiO2/AIR

| MOVABLE MIRROR | | ← FIXED MIRROR → | ← SUBSTRATE +AIR |

FIG.26

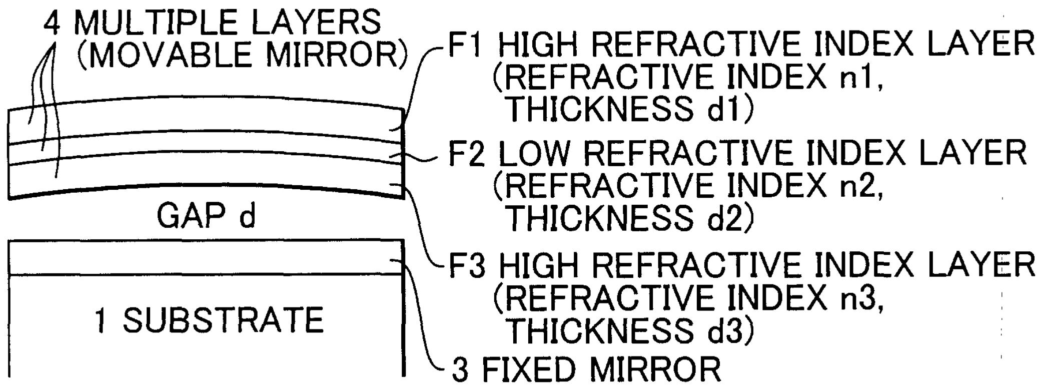


FIG.27A BEFORE SACRIFICIAL ETCHING

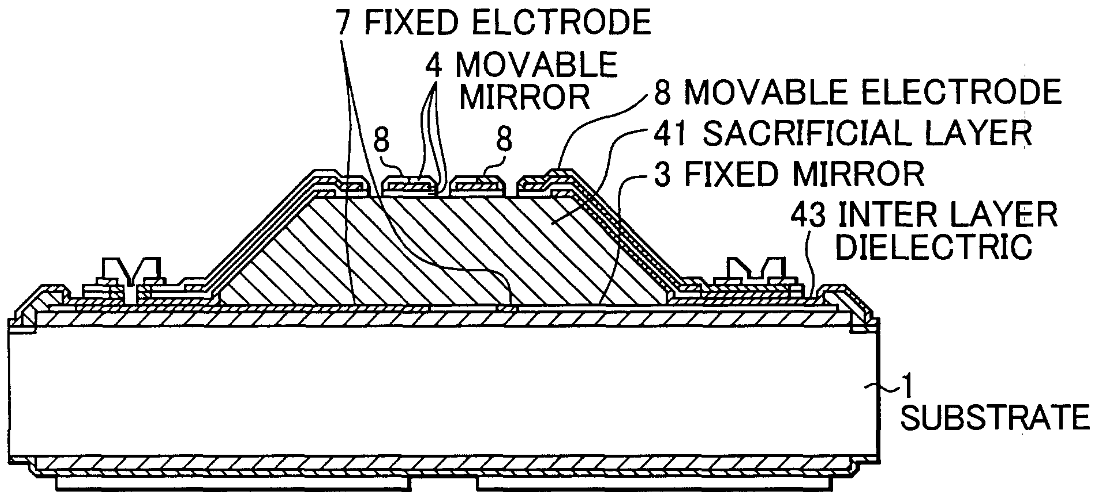


FIG.27B AFTER SACRIFICIAL ETCHING

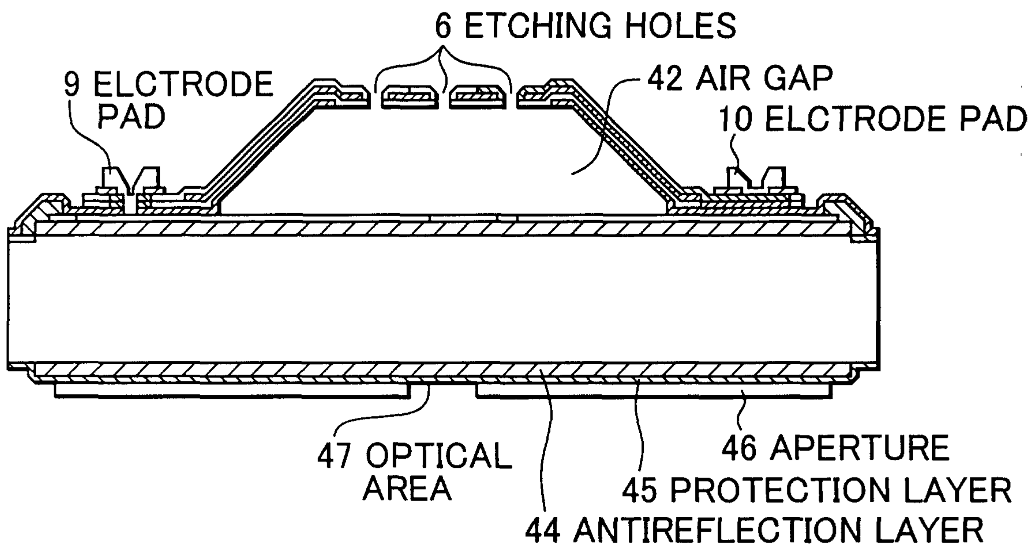

FIG.28

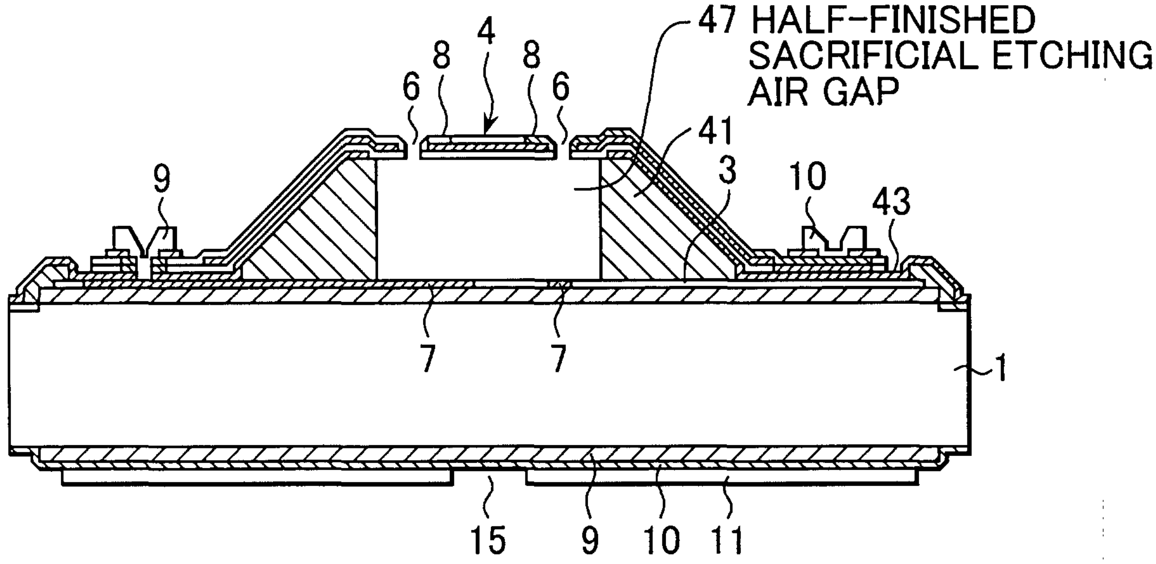
47 HALF-FINISHED SACRIFICIAL ETCHING AIR GAP
4
8
8
6
6
41
9
3
10
43
7
7
1
15
9
10
11

FIG.29

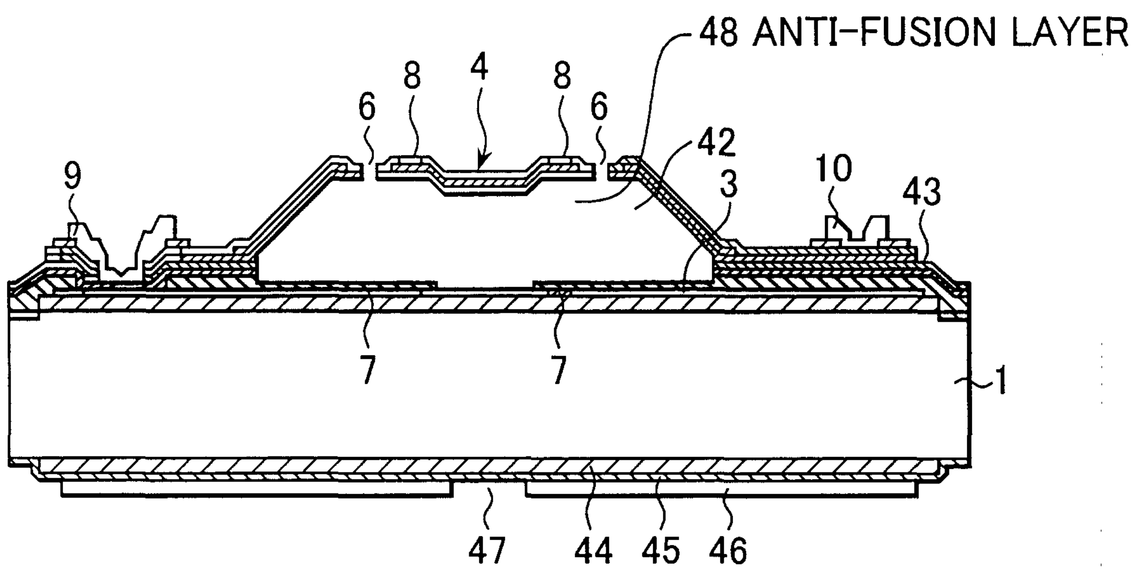
48 ANTI-FUSION LAYER
8
4
8
6
6
42
9
3
10
43
7
7
1
47
44
45
46

# FIG.30

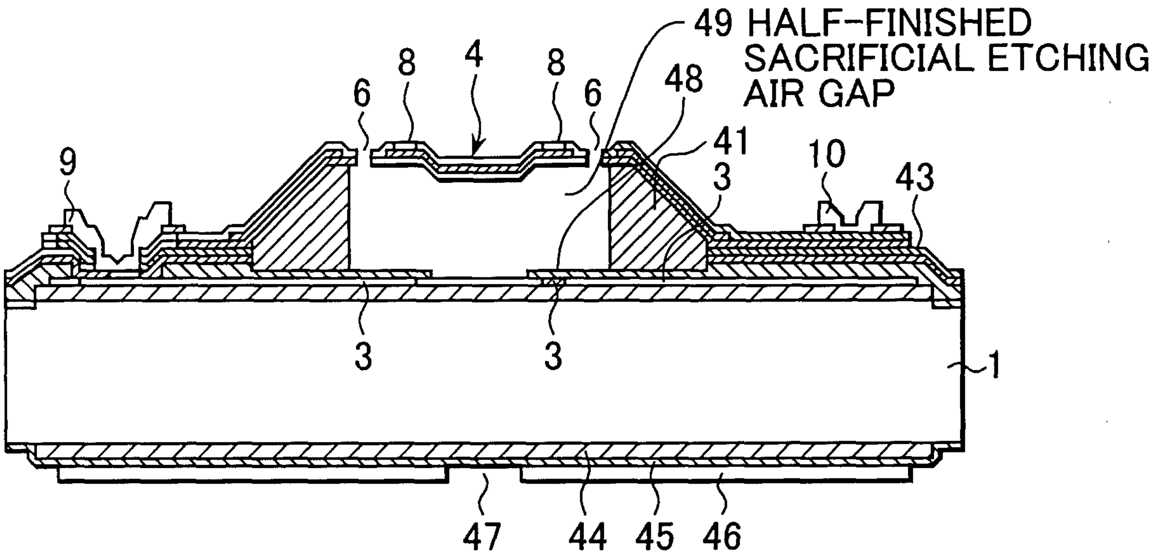
49 HALF-FINISHED SACRIFICIAL ETCHING AIR GAP
8
4
8
6
6
48
41
9
10
3
43
3
3
3
1
47
44
45
46

# FIG.31

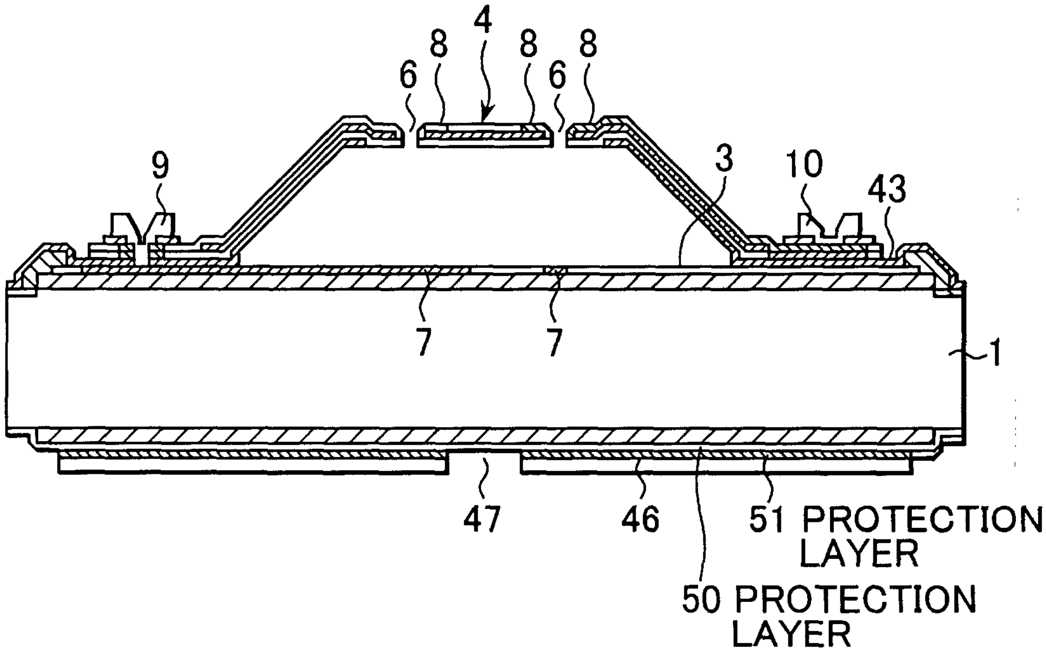
4
8
8
8
6
6
9
3
10
43
7
7
1
47
46
51 PROTECTION LAYER
50 PROTECTION LAYER